(19) Europäisches Patentamt / European Patent Office / Office européen des brevets

(11) **EP 4 648 338 A1**

(12) **EUROPEAN PATENT APPLICATION**
published in accordance with Art. 153(4) EPC

(43) Date of publication:
**12.11.2025 Bulletin 2025/46**

(21) Application number: **24744232.0**

(22) Date of filing: **16.01.2024**

(51) International Patent Classification (IPC):
*H04L 5/00* (2006.01)

(52) Cooperative Patent Classification (CPC):
**H04L 5/00; H04L 25/02; H04L 27/00**

(86) International application number:
**PCT/CN2024/072468**

(87) International publication number:
**WO 2024/153056 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.01.2023 CN 202310108596**

(71) Applicant: **Huawei Technologies Co., Ltd.**
**Shenzhen, Guangdong 518129 (CN)**

(72) Inventors:
- **YE, Chencheng**
  **Shenzhen, Guangdong 518129 (CN)**
- **YUAN, Yiling**
  **Shenzhen, Guangdong 518129 (CN)**
- **JIN, Huangping**
  **Shenzhen, Guangdong 518129 (CN)**
- **HAN, Wei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **CHANNEL STATE INFORMATION ACQUISITION METHOD AND RELATED APPARATUS**

(57) This application provides a channel state information obtaining method and a related apparatus. The method includes: obtaining first information and second information, where the first information indicates a quantity $N_T$ of time units, and the second information indicates a Doppler basis corresponding to a channel of each of M antenna ports; receiving, in each of the $N_T$ time units, M reference signals from a second device, where the M reference signals occupy a same time-frequency resource, the M reference signals are determined based on a pilot signal and a phase shift of each of the M antenna ports, and $N_T$ and M are integers greater than 1; and determining, based on the M reference signals and the second information, channel state information corresponding to each of the M antenna ports. According to the method in this application, more pilot signals can be sent on a same time-frequency resource.

FIG. 2

**Description**

This application claims priority to Chinese Patent Application No. 202310108596.6, filed with the China National Intellectual Property Administration on January 17, 2023 and entitled "CHANNEL STATE INFORMATION OBTAINING METHOD AND RELATED APPARATUS", which is incorporated herein by reference in its entirety.

**TECHNICAL FIELD**

This application relates to the field of communication technologies, and in particular, to a channel state information obtaining method and a related apparatus.

**BACKGROUND**

After a radio signal is transmitted by a transmit end, the radio signal is propagated to a receive end through a radio channel. Because various interference factors in the radio channel affect the transmitted signal, a signal received by the receive end may greatly differ from the signal transmitted by the transmit end. Therefore, to improve quality of radio communication, channel measurement (estimation) needs to be performed before data is transmitted, and then equalization is performed on received data based on a channel measurement (estimation) result, to overcome channel impact and restore data. Usually, the channel measurement (estimation) result may be obtained in a manner in which the transmit end sends a specific pilot signal and the receive end measures a received pilot signal.

It can be understood that a resource (for example, a time-frequency resource) needs to be occupied for sending the pilot signal. When a quantity of users increases (in other words, a quantity of pilot signals that need to be sent increases), more resources are used to send the pilot signals, and consequently, utilization of a resource used to send data is lowered. Therefore, how to send more pilot signals on a same time-frequency resource to improve utilization of a data transmission resource becomes a problem that urgently needs to be resolved currently.

**SUMMARY**

This application provides a channel state information obtaining method and a related apparatus, to send more reference signals on a same time-frequency resource.

According to a first aspect, this application provides a channel state information obtaining method. The method is applied to a first device, and the method includes:

obtaining first information and second information, where the first information indicates a quantity $N_T$ of time units, the second information indicates a Doppler basis corresponding to a channel of each of M antenna ports, and herein, in this application, the Doppler basis that corresponds to the channel of the antenna port and that is indicated by the second information is a Doppler basis corresponding to a received signal;

receiving, in each of the $N_T$ time units, M reference signals from a second device, where the M reference signals occupy a same time-frequency resource, the M reference signals are determined based on a pilot signal and a phase shift of each of the M antenna ports, and $N_T$ and M are integers greater than 1; and

determining, based on the M reference signals and the second information, channel state information corresponding to each of the M antenna ports.

In this application, the first device serves as a receive end of the reference signals, the second device serves as a transmit end of the reference signals, and a pilot signal sent by the transmit end is a signal obtained through a phase shift. This can ensure that Doppler spreads of different pilot signals do not overlap in Doppler domain. Therefore, the receive end may distinguish between different signals in Doppler domain based on the obtained second information. In this manner in which orthogonal multiplexing is performed on pilot signals in Doppler domain, more pilot signals can be sent on a same time-frequency resource.

In a possible implementation, the second information includes any one of the following information:

indication information of a sequence number of the Doppler basis corresponding to the channel of each of the M antenna ports; and

indication information of the phase shift corresponding to each of the M antenna ports.

In this implementation, the second information may specifically indicate the Doppler basis by using the indication information of the sequence number of the Doppler basis or the phase shift, or other information. In this way, the solution has a variety of implementations and has high applicability. For example, when the second information includes the indication information of the sequence number of the Doppler basis corresponding to the channel of each of the M antenna ports, the second information may specifically include a starting sequence number of the Doppler basis corresponding to each port.

In a possible implementation, the indication information of the phase shift corresponding to each of the M antenna ports includes any one of the following information:

indication information of a cyclic shift of each of the M antenna ports;
indication information of the quantity M of antenna ports; and
a phase shift of the pilot signal of each of the M antenna ports.

In this implementation, the phase shift corresponding to each antenna port may be specifically indicated by the cyclic shift of each of the M antenna ports, or the quantity M of antenna ports, or a phase shift of a reference signal corresponding to each of the M antenna ports. A variety of implementations are available.

In a possible implementation, obtaining the first information includes:
receiving the first information from the second device.

In this implementation, the first information may be specifically sent by the second device to the first device. Operability is high. Optionally, the first information may alternatively be predefined in a protocol or preconfigured. This is not limited herein. Optionally, the first information may be carried in RRC signaling, MAC CE signaling, a PDCCH, a PDSCH, or the like for transmission. This is not limited herein.

In a possible implementation, obtaining the second information includes:
receiving the second information from the second device.

In this implementation, the second information may be specifically sent by the second device to the first device. Operability is high. Optionally, the second information may alternatively be predefined in a protocol or preconfigured. This is not limited herein. Optionally, the second information may be carried in RRC signaling, MAC CE signaling, a PDCCH, a PDSCH, or the like for transmission. This is not limited herein.

In a possible implementation, a reference signal of an antenna port m among the M antenna ports in a $t^{th}$ time unit among the $N_T$ time units includes $s_m e^{-(t-1)\theta mj}$, where the antenna port m is any one of the M antenna ports, $1 \leq t \leq N_T$, and t is an integer; and
$s_m$ is a pilot signal of the antenna port m, $e^{-(t-1)\theta mj}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

In this implementation, M reference signals in each time unit may be specifically obtained by multiplying pilot signals corresponding to the M antenna ports by phase rotation factors respectively corresponding to the M antenna ports, where the phase rotation factors may be determined based on phase shifts. It can be understood that a shift of a Doppler frequency may be implemented by adding corresponding phase rotations (phase shifts) to pilot signals in different time units.

In a possible implementation, $\theta_m$ is $\frac{k_m}{N_{MAX}} 2\pi$ , where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$ , namely, $N_{MAX} = N_T$.

In this implementation, the phase shift may be specifically $\frac{k_m}{N_T} 2\pi$ or the like. Operability and applicability are high.

In a possible implementation, $\theta_m$ is $\frac{k_m}{N_{MAX}} 2\pi$ , where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$ , namely, $N_{MAX} = N_T$.

In a possible implementation, the method further includes:
sending, to the second device, the channel state information corresponding to each antenna port.

According to a second aspect, this application provides a channel state information obtaining method. The method is applied to a second device, and the method includes:

determining M reference signals in each of $N_T$ time units, where the M reference signals in each time unit are determined based on pilot signals corresponding to M antenna ports and phase shifts respectively corresponding to the M antenna ports, and $N_T$ and M are integers greater than 1; and

sending the M reference signals to a first device on a time-frequency resource of each time unit.

In a possible implementation, the method further includes:
sending first information to the first device, where the first information indicates a quantity $N_T$ of time units.

In a possible implementation, the method further includes:
sending second information to the first device, where the second information indicates a Doppler basis corresponding to a channel of each of the M antenna ports.

In a possible implementation,
the second information includes any one of the following information:

indication information of a sequence number of the Doppler basis corresponding to the channel of each of the M antenna ports; and
indication information of the phase shift corresponding to each of the M antenna ports.

In a possible implementation, the indication information of the phase shift corresponding to each of the M antenna ports includes any one of the following information:

indication information of a cyclic shift of each of the M antenna ports;
indication information of the quantity M of antenna ports; and
a phase shift of the pilot signal of each of the M antenna ports.

In a possible implementation, a reference signal of an antenna port m among the M antenna ports in a $t^{th}$ time unit among the $N_T$ time units includes $s_m e^{-(t-1)\theta mj}$, where the antenna port m is any one of the M antenna ports, $1 \leq t \leq N_T$, and t is an integer; and

$s_m$ is a pilot signal of the antenna port m, $e^{-(t-1)\theta mj}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

In a possible implementation, $\theta_m$ is $\frac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

In a possible implementation, $\theta_m$ is $\frac{k_m}{N_{MAX}} 2\pi$, where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

In a possible implementation, the method further includes:
receiving, from the first device, channel state information corresponding to each antenna port.

According to a third aspect, this application provides a channel state information obtaining method. The method is applied to a first device, the first device includes M1 antenna ports, and the method includes:

obtaining first information and third information, where the first information indicates a quantity $N_T$ of time units, the third information indicates a phase shift of a reference signal corresponding to each of the M1 antenna ports, and $N_T$ is an integer greater than 1; and
sending one or more reference signals to a second device on a time-frequency resource of each of the $N_T$ time units, where the one or more reference signals in each time unit is/are determined based on pilot signals corresponding to the M1 antenna ports and phase shifts respectively corresponding to the M1 antenna ports.

In this application, the first device serves as a transmit end of the reference signals, the second device serves as a receive end of the reference signals, and the transmit end performs phase shift on a to-be-sent signal based on the obtained third information. This can ensure that Doppler spreads of different signals do not overlap in Doppler domain. Therefore, the receive end may distinguish between different signals in Doppler domain. In this manner in which orthogonal multiplexing is performed on pilots in Doppler domain, more reference signals can be sent on a same time-frequency resource.

In a possible implementation, the third information includes any one of the following information:

indication information of the quantity M1 of antenna ports;
indication information of a cyclic shift of each of the M1 antenna ports;
indication information of the phase shift of the reference signal corresponding to each of the M1 antenna ports; and
indication information of a sequence number of a Doppler domain basis corresponding to a channel of each of the M1 antenna ports.

In this implementation, the third information may specifically indicate the phase shift of the reference signal corresponding to each antenna port by using the quantity M of antenna ports, or the cyclic shift of each antenna port, or the phase shift of the reference signal corresponding to each antenna port, or the sequence number of the Doppler domain basis corresponding to the channel of each antenna port. A variety of implementations are available, and applicability is high.

In a possible implementation, obtaining the first information includes:
receiving the first information from the second device.

In this implementation, the first information may be specifically sent by the second device to the first device. Operability is high. Optionally, the first information may alternatively be predefined in a protocol or preconfigured. This is not limited herein. Optionally, the first information may be carried in RRC signaling, MAC CE signaling, a PUCCH, a PUSCH, or the like for transmission. This is not limited herein.

In a possible implementation, obtaining the third information includes:
receiving the third information from the second device.

In this implementation, the third information may be specifically sent by the second device to the first device. Operability is high. Optionally, the first information may alternatively be predefined in a protocol or preconfigured. This is not limited herein. Optionally, the third information may be carried in RRC signaling, MAC CE signaling, a PUCCH, a PUSCH, or the like for transmission. This is not limited herein.

In a possible implementation, a reference signal corresponding to an antenna port m among the M1 antenna ports in a $t^{th}$ time unit among the $N_T$ time units is $s_m e^{-(t-1)\theta mj}$, where the antenna port m is any one of the M1 antenna ports, $1 \leq t \leq N_T$, and t is an integer; and

$s_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

In this implementation, M reference signals in each time unit may be specifically obtained by multiplying pilot signals corresponding to the M antenna ports by phase rotation factors respectively corresponding to the M antenna ports, where the phase rotation factors may be determined based on phase shifts. It can be understood that a shift of a Doppler frequency may be implemented by adding corresponding phase shifts to pilot signals in different time units.

In a possible implementation, $\theta_m$ is $\frac{k_m}{N_{MAX}} 2\pi$ , where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$ , namely, $N_{MAX} = N_T$.

In this implementation, the phase shift may be specifically $\frac{k_m}{N_T} 2\pi$ . Operability and applicability are high.

In a possible implementation, $\theta_m$ is $\frac{k_m}{N_{MAX}} 2\pi$ , where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$ , namely, $N_{MAX} = N_T$.

According to a fourth aspect, this application provides a channel state information obtaining method. The method is applied to a second device, and the method includes:

sending first information and one or more pieces of third information, where the first information indicates a quantity $N_T$ of time units, each piece of third information indicates a phase shift of a reference signal corresponding to each of M1 antenna ports included in one first device, a sum of quantities of antenna ports associated with all of the third information is equal to M, and $N_T$ and M are integers greater than 1;
receiving M reference signals in each of the $N_T$ time units, where the M reference signals in each time unit are determined based on pilot signals corresponding to M antenna ports and phase shifts respectively corresponding to the M antenna ports, and the M reference signals in each time unit occupy a same time-frequency resource; and
determining, based on the M reference signals corresponding to each of the $N_T$ time units and the third information, channel state information corresponding to each of the M antenna ports.

In a possible implementation, the third information includes any one of the following information:

indication information of the quantity M1 of antenna ports;
indication information of a cyclic shift of each of the M1 antenna ports;
indication information of the phase shift of the reference signal corresponding to each of the M1 antenna ports; and
indication information of a sequence number of a Doppler domain basis corresponding to a channel of each of the M1 antenna ports.

In a possible implementation, a reference signal corresponding to an antenna port m among the M antenna ports in a $t^{th}$ time unit among the $N_T$ time units is $s_m e^{-(t-1)\theta mj}$, where the antenna port m is any one of the M antenna ports, $1 \leq t \leq N_T$, and t is an integer; and

$s_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

In a possible implementation, $\theta_m$ is $\frac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

In a possible implementation, $\theta_m$ is $\frac{k_m}{N_{MAX}} 2\pi$, where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

According to a fifth aspect, this application provides a communication apparatus. The apparatus is a first device, and the apparatus includes:

a transceiver unit, configured to obtain first information and second information, where the first information indicates a quantity $N_T$ of time units, and the second information indicates a Doppler basis corresponding to a channel of each of M antenna ports, where
the transceiver unit is configured to receive, in each of the $N_T$ time units, M reference signals from a second device, where the M reference signals occupy a same time-frequency resource, the M reference signals are determined based on a pilot signal and a phase shift of each of the M antenna ports, and $N_T$ and M are integers greater than 1; and
a processing unit, configured to determine, based on the M reference signals and the second information, channel state information corresponding to each of the M antenna ports.

In a possible implementation, the second information includes any one of the following information:

indication information of a sequence number of the Doppler basis corresponding to the channel of each of the M antenna ports; and
indication information of the phase shift corresponding to each of the M antenna ports.

In a possible implementation, the indication information of the phase shift corresponding to each of the M antenna ports includes any one of the following information:

indication information of a cyclic shift of each of the M antenna ports;
indication information of the quantity M of antenna ports; and
a phase shift of the pilot signal of each of the M antenna ports.

In a possible implementation, when obtaining the first information, the transceiver unit is configured to:
receive the first information from the second device.
In a possible implementation, when obtaining the second information, the transceiver unit is configured to:
receive the second information from the second device.
In a possible implementation, a reference signal of an antenna port m among the M antenna ports in a $t^{th}$ time unit among the $N_T$ time units includes $s_m e^{-(t-1)\theta mj}$, where the antenna port m is any one of the M antenna ports, $1 \leq t \leq N_T$, and t is an integer; and
$s_m$ is a pilot signal of the antenna port m, $e^{-(t-1)\theta mj}$ is a phase rotation factor corresponding to the antenna port m in the $t^{th}$ time

unit, $\theta_m$ is a phase shift of the pilot signal of the antenna port m between adjacent time units among the $N_T$ time units, and j is an imaginary number.

In a possible implementation, $\theta_m$ is $\frac{k_m}{N_{MAX}}2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T}2\pi$, namely, $N_{MAX} = N_T$.

In a possible implementation, $\theta_m$ is $\frac{k_m}{N_{MAX}}2\pi$, where $k_m$ represents a cyclic shift of the antenna port m, $0 \le k_m < N_{MAX}$ or $-N_{MAX} < k_m \le 0$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T}2\pi$, namely, $N_{MAX} = N_T$.

In a possible implementation, the transceiver unit is further configured to:
send, to the second device, the channel state information corresponding to each antenna port.

According to a sixth aspect, this application provides a communication apparatus. The apparatus is a second device, and the apparatus includes:

> a processing unit, configured to determine M reference signals in each of $N_T$ time units, where the M reference signals in each time unit are determined based on pilot signals corresponding to M antenna ports and phase shifts respectively corresponding to the M antenna ports, and $N_T$ and M are integers greater than 1; and
> a transceiver unit, configured to send the M reference signals to a first device on a time-frequency resource of each time unit.

In a possible implementation, the transceiver unit is further configured to:
send first information to the first device, where the first information indicates a quantity $N_T$ of time units.

In a possible implementation, the transceiver unit is further configured to:
send second information to the first device, where the second information indicates a Doppler basis corresponding to a channel of each of the M antenna ports.

In a possible implementation, the second information includes any one of the following information:

> indication information of a sequence number of the Doppler basis corresponding to the channel of each of the M antenna ports; and
> indication information of the phase shift corresponding to each of the M antenna ports.

In a possible implementation, the indication information of the phase shift corresponding to each of the M antenna ports includes any one of the following information:

> a cyclic shift of each of the M antenna ports;
> the quantity M of antenna ports; and
> a phase shift of a reference signal corresponding to each of the M antenna ports.

In a possible implementation, a reference signal corresponding to an antenna port m among the M antenna ports in a $t^{th}$ time unit among the $N_T$ time units is $s_m e^{-(t-1)\theta_m j}$, where the antenna port m is any one of the M antenna ports, $1 \le t \le N_T$, and t is an integer; and

$s_m$ is a pilot signal corresponding to the antenna port m, $e^{-(t-1)\theta_m j}$ is a phase rotation factor corresponding to the antenna port m in the $t^{th}$ time unit among the $N_T$ time units, $\theta_m$ is a phase shift of a reference signal corresponding to the antenna port m between adjacent time units among the $N_T$ time units, and j is an imaginary number.

In a possible implementation, $\theta_m$ is $\frac{k_m}{N_{MAX}}2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T}2\pi$, namely, $N_{MAX} = N_T$.

In a possible implementation, $\theta_m$ is $\frac{k_m}{N_{MAX}}2\pi$, where $k_m$ represents a cyclic shift of the antenna port m, $0 \le k_m < N_{MAX}$ or $-N_{MAX} < k_m \le 0$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T}2\pi$, namely, $N_{MAX} = N_T$.

In a possible implementation, the transceiver unit is further configured to:
receive, from the first device, channel state information corresponding to each antenna port.

According to a seventh aspect, this application provides a communication apparatus. The apparatus is a first device, the first device includes M1 antenna ports, and the apparatus includes:

a transceiver unit, configured to obtain first information and third information, where the first information indicates a quantity $N_T$ of time units, the third information indicates a phase shift of a reference signal corresponding to each of the M1 antenna ports, and $N_T$ is an integer greater than 1, where
the transceiver unit is configured to send one or more reference signals to a second device on a time-frequency resource of each time unit, where the one or more reference signals in each is/are determined based on pilot signals corresponding to the M1 antenna ports and phase shifts respectively corresponding to the M1 antenna ports.

In a possible implementation, the third information includes any one of the following information:

the quantity M1 of antenna ports;
a cyclic shift of each of the M1 antenna ports;
the phase shift of the reference signal corresponding to each of the M1 antenna ports; and
indication information of a sequence number of a Doppler domain basis corresponding to a channel of each of the M1 antenna ports.

In a possible implementation, when obtaining the first information, the transceiver unit is configured to:
receive the first information from the second device.

In a possible implementation, when obtaining the third information, the transceiver unit is configured to:
receive the third information from the second device.

In a possible implementation, a reference signal of an antenna port m among the M1 antenna ports in a $t^{th}$ time unit among the $N_T$ time units includes $s_m e^{-(t-1)\theta m j}$, where the antenna port m is any one of the M1 antenna ports, $1 \leq t \leq N_T$, and t is an integer; and
$s_m$ is a pilot signal of the antenna port m, $e^{-(t-1)\theta m j}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

In a possible implementation, $\theta_m$ is $\frac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

In a possible implementation, $\theta_m$ is $\frac{k_m}{N_{MAX}} 2\pi$, where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

According to an eighth aspect, this application provides a communication apparatus. The apparatus is a second device, and the apparatus includes:

a transceiver unit, configured to send first information and one or more pieces of third information, where the first information indicates a quantity $N_T$ of time units, each piece of third information indicates a phase shift of a reference signal corresponding to each of M1 antenna ports included in one first device, a sum of quantities of antenna ports associated with all of the third information is equal to M, and $N_T$ and M are integers greater than 1, where
the transceiver unit is configured to receive M reference signals in each of the $N_T$ time units, where the M reference signals in each time unit are determined based on pilot signals corresponding to M antenna ports and phase shifts respectively corresponding to the M antenna ports, and the M reference signals in each time unit occupy a same time-frequency resource; and
a processing unit, configured to determine, based on the M reference signals corresponding to each of the $N_T$ time units and the third information, channel state information corresponding to each of the M antenna ports.

In a possible implementation, the third information includes any one of the following information:

the quantity M1 of antenna ports;

a cyclic shift of each of the M1 antenna ports;
the phase shift of the reference signal corresponding to each of the M1 antenna ports; and
indication information of a sequence number of a Doppler domain basis corresponding to a channel of each of the M1 antenna ports.

In a possible implementation, a reference signal corresponding to an antenna port m among the M antenna ports in a $t^{th}$ time unit among the $N_T$ time units is $s_m e^{-(t-1)\theta mj}$, where the antenna port m is any one of the M antenna ports, $1 \leq t \leq N_T$, and t is an integer; and

$s_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

In a possible implementation, $\theta_m$ is $\dfrac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\dfrac{k_m}{N_T} 2\pi$, namely, $N_{MAX} = N_T$.

In a possible implementation, $\theta_m$ is $\dfrac{k_m}{N_{MAX}} 2\pi$, where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\dfrac{k_m}{N_T} 2\pi$, namely, $N_{MAX} = N_T$.

In a possible implementation, the transceiver unit is further configured to:
send, to the first device, the channel state information corresponding to each antenna port.

According to a ninth aspect, this application provides a communication apparatus. The communication apparatus may be a first device, and includes a processor, a transceiver, and a memory. The processor and the transceiver are coupled to the memory. The memory stores a computer program. The processor and the transceiver are configured to invoke the computer program in the memory, to enable the communication apparatus to perform the method in the first aspect or the third aspect.

In a possible design, the communication apparatus may be a chip for implementing the method in the first aspect or the third aspect, or a device including a chip.

According to a tenth aspect, this application provides a communication apparatus. The communication apparatus may be a second device, and includes a processor, a transceiver, and a memory. The processor and the transceiver are coupled to the memory. The memory stores a computer program. The processor and the transceiver are configured to invoke the computer program in the memory, to enable the communication apparatus to perform the method in the second aspect or the fourth aspect.

In a possible design, the communication apparatus may be a chip for implementing the method in the second aspect or the fourth aspect, or a device including a chip.

According to an eleventh aspect, this application provides a communication apparatus. The communication apparatus may be a first device, and includes a processor and an interface circuit. The interface circuit is configured to receive a signal from a communication apparatus other than the communication apparatus and transmit the signal to the processor, or send a signal that comes from the processor to a communication apparatus other than the communication apparatus. The processor is configured to implement the method in the first aspect or the third aspect through a logic circuit or by executing code instructions.

According to a twelfth aspect, this application provides a communication apparatus. The communication apparatus may be a second device, and includes a processor and an interface circuit. The interface circuit is configured to receive a signal from a communication apparatus other than the communication apparatus and transmit the signal to the processor, or send a signal that comes from the processor to a communication apparatus other than the communication apparatus. The processor is configured to implement the method in the second aspect or the fourth aspect through a logic circuit or by executing code instructions.

According to a thirteenth aspect, this application provides a computer-readable storage medium. The storage medium stores a computer program or computer instructions. When the computer program or the computer instructions is/are executed by a computer, the method in the first aspect or the third aspect is implemented.

According to a fourteenth aspect, this application provides a computer-readable storage medium. The storage medium stores a computer program or computer instructions. When the computer program or the computer instructions is/are executed by a computer, the method in the second aspect or the fourth aspect is implemented.

According to a fifteenth aspect, this application provides a computer program product. When a computer reads and executes the computer program product, the computer is enabled to perform the method in the first aspect or the third aspect.

According to a sixteenth aspect, this application provides a computer program product. When a computer reads and executes the computer program product, the computer is enabled to perform the method in the second aspect or the fourth aspect.

According to a seventeenth aspect, this application provides a communication system. The communication system includes the first device in the fifth aspect, the seventh aspect, the ninth aspect, or the eleventh aspect, and the second device in the sixth aspect, the eighth aspect, the tenth aspect, or the twelfth aspect.

## BRIEF DESCRIPTION OF DRAWINGS

FIG. 1 is a diagram of a network architecture of a communication system;
FIG. 2 is a diagram of interaction in a channel state information obtaining method according to an embodiment of this application;
FIG. 3 is a diagram of a scenario in which a pilot signal is shifted in Doppler domain according to an embodiment of this application;
FIG. 4 is another diagram of interaction in a channel state information obtaining method according to an embodiment of this application;
FIG. 5 is a diagram of a structure of a communication apparatus according to an embodiment of this application;
FIG. 6 is a diagram of a structure of another communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

## DESCRIPTION OF EMBODIMENTS

The following clearly and completely describes technical solutions in embodiments of this application with reference to accompanying drawings in embodiments of this application.

In descriptions of this application, "/" indicates "or", unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, "at least one" means one or more, and "a plurality of" means two or more. The terms "first", "second", and the like do not limit a quantity or an execution sequence, and the terms "first", "second", and the like do not indicate a definite difference.

In this application, the term "example", "for example", or the like is used to give an example, an illustration, or a description. Any embodiment or design scheme described as an "example" or "for example" in this application should not be construed as being more preferred or more advantageous than another embodiment or design scheme. To be precise, the term "example", "for example", or the like is intended to present a related concept in a specific manner.

In this application, "indicate" may include a direct indication and an indirect indication, or may include an explicit indication and an implicit indication. The description "specific indication information indicates A" or "indication information of A" may include that the indication information directly indicates A or indirectly indicates A, but does not mean that the indication information necessarily carries A. Information indicated by specific information (for example, configuration information in the following descriptions) is referred to as to-be-indicated information. During specific implementation, the to-be-indicated information may be indicated in a plurality of manners, for example, but not limited to, a manner of directly indicating the to-be-indicated information, for example, indicating the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, specific information may be indicated by an arrangement sequence of a plurality of pieces of information that is pre-agreed upon (for example, stipulated in a protocol), to reduce indication overheads to some extent. In addition, a common part of information may alternatively be identified and indicated in a unified manner, to reduce indication overheads caused by separately indicating same information. In addition, specific indication manners may alternatively be various existing indication manners, for example, but not limited to, the foregoing indication manners and various combinations thereof. For details about the various indication manners, refer to the conventional technology. Details are not described in this specification. It can be learned from the foregoing descriptions that, for example, when a plurality of pieces of information of a same type need to be indicated, different information may be indicated in different manners. During specific implementation, a needed indication manner may be selected according to a specific requirement. The selected indication manner is not limited in embodiments of this application. In this way, the indication manner in embodiments of this application should be understood as covering various methods that enable a to-be-indicated entity to learn of the to-be-indicated information. The to-be-indicated information may be sent as a whole, or may be divided into a plurality of pieces of sub-information for separate sending. In addition, sending periodicities or sending occasions of the sub-information may be the same or different. A specific sending method is not limited in this application. The sending periodicities or the sending occasions of the sub-information may be predefined, for example, predefined according to a protocol, or may be configured by a transmit-end device by sending configuration information to a receive-end device.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, an evolved system after 5G such as a 6th generation (6th generation, 6G) system, and a wireless local area network (Wireless Local Area Network, WLAN). This is not limited herein.

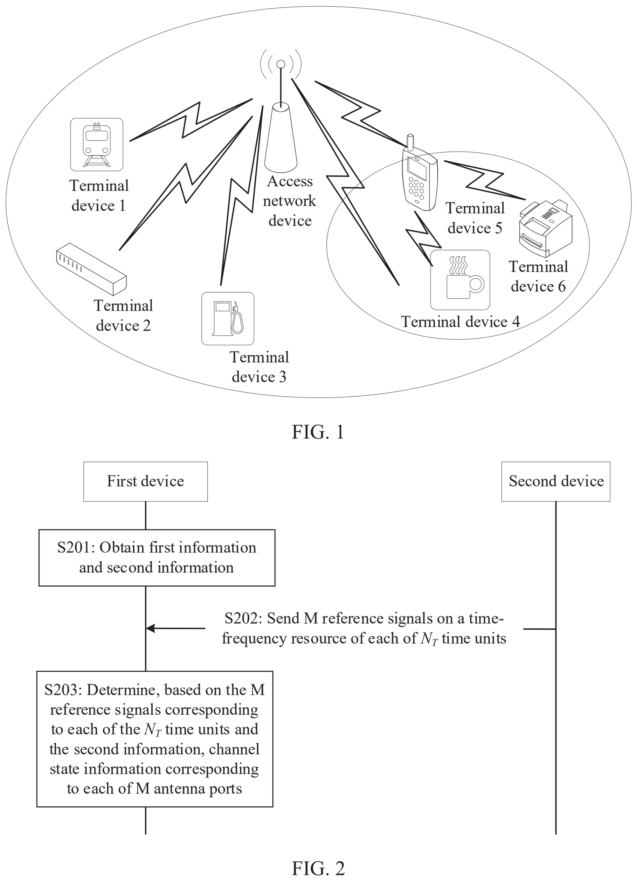

For example, FIG. 1 is a diagram of a network architecture of a communication system. As shown in FIG. 1, an access network device and a terminal device 1 to a terminal device 6 form a communication system. In the communication system, the terminal device 1 to the terminal device 6 may send uplink information to the access network device, and the access network device may also send downlink information to the terminal device 1 to the terminal device 6. In addition, the terminal device 4 to the terminal device 6 may also form a communication system. In the communication system, the access network device may send downlink information to the terminal device 1, the terminal device 2, the terminal device 3, the terminal device 5, and the like, and the terminal device 5 may also send downlink information to the terminal device 4 and the terminal device 6. The terminal device 4 and the terminal device 6 may also send uplink information to the access network device through the terminal device 5.

The terminal device in embodiments of this application may be a device with a wireless transceiver function, and may be specifically a user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device mounted on a high-altitude aircraft, a wearable device, an uncrewed aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in the terminal device or used with the terminal device. In embodiments of this application, the chip system may include a chip, or may include a chip and another discrete component.

The access network device in embodiments of this application may be a device with a wireless transceiver function, and is configured to perform communication with the terminal device, or may be a device that connects the terminal device to a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network or a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in an evolved communication system after 5G, an access point (access point, AP) in a Wi-Fi system, a transmission and reception point (transmission and reception point, TRP), a transmission point (transmission point, TP), a mobile switching center, or a device that performs a base station function in device-to-device (Device-to-Device, D2D), vehicle-to-everything (vehicle-to-everything, V2X), or machine-to-machine (machine-to-machine, M2M) communication; or may include a central unit (central unit, CU) and a distributed unit (distributed unit, DU) in a cloud access network (cloud radio access network, C-RAN) system, or a network device in a non-terrestrial network (non-terrestrial network, NTN) communication system, that is, may be deployed on a high-altitude platform or a satellite. This is not specifically limited in embodiments of this application.

The access network device may communicate and interact with a core network device, to provide a communication service for the terminal device. The core network device is, for example, a device in a core network (core network, CN) of a 5G network. As a bearer network, the core network provides an interface for connecting to a data network, provides communication connection, authentication, management, and policy control for a terminal, carries a data service, and the like.

In embodiments of this application, an apparatus configured to implement a function of the access network device may be an access network device, or may be an apparatus that can support the access network device in implementing the function, for example, a chip system. The apparatus may be mounted in the access network device or used with the access network device.

It should be noted that, in subsequent descriptions of embodiments of this application, a first device may be an access network device, and a second device may be a terminal device; or a first device may be a terminal device, and a second device may be an access network device. This is specifically determined based on an actual scenario, and is not limited herein. For ease of description, in embodiments of this application, an example in which the first device is a terminal device and the second device is an access network device is mainly used for description. One access network device may include a plurality of antenna ports, and one terminal device may include one antenna port, or one terminal device may include a plurality of antenna ports. This is specifically determined based on an actual application scenario, and is not limited herein.

For ease of understanding related content in embodiments of this application, the following describes some knowledge needed in the solutions of this application. It should be noted that the descriptions are intended to make embodiments of this application easier to understand, but should not be construed as a limitation on the protection scope claimed in this application.

1. Doppler domain

The Doppler domain is a transform domain of time domain, and is a dimension for describing a Doppler shift of a channel. In radio channel transmission, a difference between multipath Doppler shifts leads to time selective fading, namely, a change in a time domain channel. The multipath Doppler shifts may indicate a time domain change rule of a channel.

2. Doppler basis

The Doppler basis is also referred to as a Doppler domain basis, or may be referred to as a Doppler (domain) base vector or a Doppler (domain) discrete Fourier transform (discrete fourier transform, DFT) vector, and corresponds to a column vector in a DFT transformation matrix. Each Doppler basis corresponds to one Doppler shift, and each Doppler basis may indicate a time-domain change rule of a channel.

3. Antenna port

The antenna port is an air interface environment-based identification of a physical channel or a physical signal, and a same antenna port corresponds to a same channel environment. Each antenna port may be implemented by using one physical antenna unit or an antenna array including at least two physical antenna units. Usually, different antenna ports use different time-frequency domain resources to transmit reference signals for channel measurement.

In embodiments of this application, the antenna port may also be referred to as a port for short.

4. Resource element (resource element, RE)

The RE is a physical layer resource at a minimum granularity, and is one subcarrier (subcarrier) in frequency domain and one orthogonal frequency division multiplexing (orthogonal frequency division multiplexing, OFDM) symbol in time domain. The RE in this application is mainly described from a frequency domain dimension. For example, a quantity of REs is a quantity of REs in different frequency domains in a same OFDM symbol.

It should be noted that, after a radio signal is transmitted by a transmit end, the radio signal is propagated to a receive end through a radio channel. Because various interference factors in the radio channel affect the transmitted signal, a signal received by the receive end may greatly differ from the signal transmitted by the transmit end. Therefore, to improve communication quality, channel measurement (estimation) needs to be performed before data is transmitted, and then equalization is performed on received data based on a channel measurement (estimation) result, to overcome channel impact and restore data. Usually, the channel measurement (estimation) result may be obtained in a manner in which the transmit end sends a specific pilot signal and the receive end measures a received pilot signal.

It can be understood that a resource (for example, a time-frequency resource) needs to be occupied for sending the pilot signal. When a quantity of users increases (in other words, a quantity of pilot signals that need to be sent increases), more resources are used to send the pilot signals, and consequently, an amount of resources for sending data decreases, leading to a reduction in utilization of a data transmission resource. Therefore, how to send more pilot signals on a same time-frequency resource becomes a problem that urgently needs to be resolved currently.

Based on this, this application provides a channel state information obtaining method and a related apparatus, to send more pilot signals on a same time-frequency resource and improve utilization of a data transmission resource.

The following describes in detail the channel state information obtaining method and a communication apparatus that are provided in this application.

FIG. 2 is a diagram of interaction in a channel state information obtaining method according to an embodiment of this application. As shown in FIG. 2, the channel state information obtaining method includes the following steps S201 to S203. The method shown in FIG. 2 may be performed by a first device and a second device, or the method shown in FIG. 2 may be performed by a chip in a first device and a chip in a second device. It should be noted that FIG. 2 is a schematic flowchart of a method embodiment of this application, and shows detailed communication steps or operations of the method. However, these steps or operations are merely examples. Other operations or variants of various operations in FIG. 2 may alternatively be performed in embodiments of this application. In addition, the steps in FIG. 2 may be performed in an order different from an order shown in FIG. 2, and not all of the operations in FIG. 2 may be performed. In FIG. 2, an example in which the method is performed by the first device and the second device is used below for description.

S201: The first device obtains first information and second information.

In some feasible implementations, the first information indicates a quantity $N_T$ of time units, and the second information indicates a Doppler basis corresponding to a channel of each of M antenna ports. Optionally, a value of $N_T$ is related to M. Usually, a larger value of M indicates a larger value of $N_T$, and a smaller value of M indicates a smaller value of $N_T$. It should be understood that the Doppler basis in this application is a Doppler basis corresponding to a received signal, and the received signal is used for determining channel state information. Both $N_T$ and M are integers greater than 1.

For example, in an implementation, that the first device obtains the first information may be understood as that the second device sends the first information to the first device and the first device correspondingly receives the first information from the second device; and that the first device obtains the second information may be understood as that the second device sends the second information to the first device and the first device correspondingly receives the second information from the second device. That is, at least one of the first information and the second information may be configured by the second device for the first device. Optionally, in another implementation, at least one of the first information and the second information may be predefined in a protocol or preconfigured. Optionally, the indicated quantity $N_T$ of time units that is indicated by the first information may alternatively be calculated by the first device based on a Doppler spread (this is an internal implementation of the first device), or the like. This is not limited herein. For ease of understanding, in this embodiment of this application, an example in which the first information and the second information are configured by the second device for the first device is mainly used for description.

It can be understood that, when the first information and the second information are configured by the second device for the first device, the first information and the second information may be carried in a same piece of signaling and sent to the first device, or the first information and the second information may be separately carried in different pieces of signaling and sent to the first device. This is not limited herein. For example, the signaling herein may be RRC signaling or MAC CE signaling. This is not limited herein. Optionally, at least one of the first information and the second information may alternatively be carried in a physical downlink control channel (physical downlink control channel, PDCCH), for example, in PDCCH downlink control information (downlink control information, DCI), or in a physical downlink shared channel (physical downlink shared channel, PDSCH). This is not limited herein.

Optionally, the second information may specifically include any one of the following information.

1. Indication information of a sequence number of the Doppler basis corresponding to the channel of each of the M antenna ports. A sequence number of a Doppler basis is used to identify the Doppler basis.

It can be understood that a value range of the sequence number of the Doppler basis is 1, 2, ..., and $N_T$. Fourier transform may be performed on signals in the $N_T$ time units to correspondingly obtain $N_T$ Doppler domain signals. Because each Doppler domain signal corresponds to one Doppler shift, in other words, corresponds to one Doppler basis, a quantity of sequence numbers of Doppler bases is also $N_T$. A channel of each antenna port may correspond to a sequence number/sequence numbers of one or more Doppler bases, and sequence numbers of Doppler bases corresponding to channels of different antenna ports are usually not repeated. Herein, because a channel of one port may include a plurality of Doppler shifts, a channel of one port may correspond to a plurality of sequence numbers of Doppler bases. It should be understood that the sequence number may alternatively be an index, a bit indication in a bitmap (bitmap), or the like. This is not limited in this application.

For example, it is assumed that $N_T$=10. The second information may include sequence numbers 1, 2, and 3 of Doppler bases corresponding to a channel of a port 1, and sequence numbers 4, 5, and 6 of Doppler bases corresponding to a channel of a port 2.

For another example, it is assumed that $N_T$=10. The second information may include a starting sequence number 1 of Doppler bases corresponding to a channel of a port 1, and a starting sequence number 4 of Doppler bases corresponding to a channel of a port 2. In addition, it is predefined in a protocol or configured by the second device that quantities of sequence numbers of Doppler bases corresponding to all ports are the same and are all 3. Therefore, sequence numbers 1, 2, and 3 of the Doppler bases corresponding to the channel of the port 1 may be determined based on the quantity 3 and the starting sequence number 1 of the Doppler bases corresponding to the channel of the port 1, and sequence numbers 4, 5, and 6 of the Doppler bases corresponding to the channel of the port 2 may be determined based on the quantity 3 and the starting sequence number 4 of the Doppler bases corresponding to the channel of the port 2.

For another example, it is assumed that $N_T$=10. The second information may include a starting sequence number 2 of Doppler bases corresponding to a channel of a port 1, and a starting sequence number 7 of Doppler bases corresponding to a channel of a port 2. In addition, it is predefined in a protocol that Doppler bases corresponding to all sequence numbers from a starting sequence number of a current port to a next starting sequence number belong to the port. Therefore, sequence numbers 2, 3, 4, 5, and 6 of the Doppler bases corresponding to the channel of the port 1 may be determined based on the starting sequence number 2 of the Doppler bases corresponding to the channel of the port 1 and the next starting sequence number 7, and sequence numbers 7, 8, 9, 10, and 1 of the Doppler bases corresponding to the channel of the port 2 may be determined based on the starting sequence number 7 of the Doppler bases corresponding to the channel of the port 2 and the next starting sequence number 2 (because of a periodicity of a Doppler spectrum).

For another example, it is assumed that $N_T$=10. The second information may include an ending sequence number 3 of Doppler bases corresponding to a channel of a port 1, and an ending sequence number 6 of Doppler bases corresponding to a channel of a port 2. In addition, it is predefined in a protocol that quantities of sequence numbers of Doppler bases corresponding to all ports are the same and are all 3. Therefore, sequence numbers 1, 2, and 3 of the Doppler bases corresponding to the channel of the port 1 may be determined based on the quantity 3 and the ending sequence number 3 of the Doppler bases corresponding to the channel of the port 1, and sequence numbers 4, 5, and 6 of the Doppler bases corresponding to the channel of the port 2 may be determined based on the quantity 3 and the ending sequence number 6 of the Doppler bases corresponding to the channel of the port 2.

For another example, it is assumed that $N_T$=10. The second information may include an ending sequence number 2 of Doppler bases corresponding to a channel of a port 1, and an ending sequence number 7 of Doppler bases corresponding to a channel of a port 2. In addition, it is predefined in a protocol that Doppler bases corresponding to all sequence numbers from a previous ending sequence number to an ending sequence number of a current port belong to the port. Therefore, sequence numbers 8, 9, 10, 1, and 2 of the Doppler bases corresponding to the channel of the port 1 may be determined based on the ending sequence number 2 of the Doppler bases corresponding to the channel of the port 1 and the previous ending sequence number 7 (because of a periodicity of a Doppler spectrum), and sequence numbers 3, 4, 5, 6, and 7 of the Doppler bases corresponding to the channel of the port 2 may be determined based on the ending sequence number 7 of the Doppler bases corresponding to the channel of the port 2 and the previous ending sequence number 2.

Optionally, the second information directly includes indication information of the quantity M of antenna ports. For example, it is assumed that $N_T$=10. The second information includes that the quantity M of antenna ports is 2. In addition, it is predefined in a protocol that a starting sequence number of Doppler bases corresponding to the 1st port is 1 and quantities R of sequence numbers of Doppler bases corresponding to all ports are the same, where $R=\left\lfloor \frac{N_T}{M} \right\rfloor=\left\lfloor \frac{10}{2} \right\rfloor=5$, and $\lfloor \rfloor$ indicates rounding down. In this case, sequence numbers of Doppler bases corresponding to a channel of a port 1 are 1, 2, 3, 4, and 5, and sequence numbers of Doppler bases corresponding to a channel of a port 2 are 6, 7, 8, 9, and 10. For another example, it is assumed that $N_T$=11. The second information includes that the quantity M of antenna ports is 2. In addition, it is predefined in a protocol that a starting sequence number of Doppler bases corresponding to the 1st port is 1, quantities R of sequence numbers of Doppler bases corresponding to all ports are the same ($R=\left\lfloor \frac{N_T}{M} \right\rfloor=\left\lfloor \frac{11}{2} \right\rfloor=5$), and the sequence numbers of the Doppler bases corresponding to all the ports are continuous. In this case, sequence numbers of Doppler bases corresponding to a channel of a port 1 are 1, 2, 3, 4, and 5, and sequence numbers of Doppler bases corresponding to a channel of a port 2 are 6, 7, 8, 9, and 10.

2. Indication information of a phase shift (phase shift) corresponding to each of the M antenna ports.

It can be understood that a sequence number of a Doppler basis corresponding to a channel of each antenna port and a phase shift corresponding to each antenna port may be converted into each other (derived based on each other). To be specific, the phase shift corresponding to each antenna port may be determined (derived) based on the sequence number of the Doppler basis corresponding to the channel of each antenna port, or the sequence number of the Doppler basis corresponding to the channel of each antenna port may be determined (derived) based on the phase shift corresponding to each antenna port. For example, $R_m = \left\lfloor \frac{N_T}{2\pi} \theta_m \right\rfloor$, or $R_m = \left\lceil \frac{N_T}{2\pi} \theta_m \right\rceil$, where $\lceil \rceil$ indicates rounding up, $\theta_m$ is a phase shift of a pilot signal corresponding to an antenna port m between adjacent time units among $N_T$ time units, and $R_m$ is a shift value or a variation value of a sequence number of a Doppler basis corresponding to a channel of the antenna port m. It should be understood that phase shifts between all adjacent time units are the same.

For example, it is assumed that $N_T$ =10. A phase shift, indicated by the second information, of a pilot signal corresponding to a port 1 is 0, and a phase shift, indicated by the second information, of a pilot signal corresponding to a port 2 is $\pi$. It is assumed that initial sequence numbers, obtained by the first device, of Doppler bases corresponding to a channel of the port 1 are 1, 2, 3, and 4, and initial sequence numbers, obtained by the first device, of Doppler bases corresponding to a channel of the port 2 are 2, 3, 4, and 5 (for example, the initial sequence numbers of the Doppler bases may be measured by using a tracking reference signal (tracking reference signal, TRS) or a CSI-RS). In this case, after the phase shift is performed, sequence numbers of Doppler bases corresponding to the channel of the port 1 are 1, 2, 3, and 4 (to be specific, a sequence number variation value corresponding to the phase shift 0 is 0, in other words, a sequence number increase $\frac{N_T}{2\pi}0$ is 0), and sequence numbers of Doppler bases corresponding to the channel of the port 2 are 7, 8, 9, and 10 (to be specific, a sequence number variation value corresponding to the phase shift $\pi$ is 5, in other words, a sequence number increase $\frac{N_T}{2\pi}\pi$ is 5).

It should be noted that, in descriptions of this embodiment of this application, performing phase shift on pilot signals of different antenna ports is equivalent to performing Doppler domain shift on pilot signals sent by different antenna ports.

For example, the "2. Indication information of a phase shift corresponding to each of the M antenna ports" may include any one of the following information.

2-1. Indication information of a cyclic shift of each of the M antenna ports.

For example, it is assumed that $N_T$=10. The second information includes that a cyclic shift of a port 1 is $k_1$ and a cyclic shift of a port 2 is $k_2$. Therefore, it can be learned that a phase shift $\theta_1$ of the port 1 is $\frac{k_1}{N_{MAX}}2\pi$ and a phase shift $\theta_2$ of the port 2 is $\frac{k_2}{N_{MAX}}2\pi$, where $k_m$ is an integer, $N_{MAX}$ represents a maximum quantity of signals to be multiplexed, $0 < N_{MAX} \leq N_T$, $N_{MAX}$ is an integer, a value range of $k_m$ may be $0 \leq k_m < N_{MAX}$ or $-N_{MAX} < k_m \leq 0$. In addition, a value range of $k_m$ may alternatively be $-N_{MAX} < k_m < N_{MAX}$. A specific value of $N_{MAX}$ may be predefined in a protocol or indicated by the second device.

It should be noted that, because a value range of a phase shift of a pilot symbol corresponding to any antenna port is $[0,2\pi)$, when $-N_{MAX} < k_m \leq 0$, a corresponding phase shift may be mapped to the range of $[0,2\pi)$ by adding $2\pi$ to the phase shift.

2-2. Indication information of the quantity M of antenna ports.

For example, it is assumed that $N_T$=10. The second information includes that the quantity M of antenna ports is 2. It is predefined in a protocol that a phase shift $\theta_m$ corresponding to a port m among the M ports is $\frac{m-1}{M}2\pi$. In this case, a phase shift corresponding to a port 1 is 0, and a phase shift corresponding to a port 2 is $\pi$. $1 \leq m \leq M$, and m is an integer.

2-3. A phase shift of a pilot signal corresponding to each of the M antenna ports.

For example, it is assumed that $N_T$=10. The second information includes that a phase shift corresponding to a port 1 is 0 and a phase shift corresponding to a port 2 is $\pi$.

It can be understood that a value range of a phase shift of a pilot signal corresponding to any antenna port is $[0,2\pi)$, and a phase shift beyond the range of $[0,2\pi)$ may be mapped to the range of $[0,2\pi)$ by adding an integer multiple of $2\pi$ to the phase shift or subtracting an integer multiple of $2\pi$ from the phase shift.

It should be understood that the M antenna ports are ports used by the second device to send pilot signals. Optionally, in some feasible implementations, the second device determines, based on a size of a Doppler spread of each antenna port, whether to send reference signals of a plurality of antenna ports on a same time-frequency resource. The size of the Doppler spread of each antenna port may be obtained based on a pilot signal sent by the first device or based on a moving speed of the first device. Usually, a higher moving speed of the first device indicates a larger Doppler spread. For example, the second device detects, based on the pilot signal sent by the first device, that the Doppler spread of each antenna port is small, and pilot signals of a plurality of ports can remain orthogonal in Doppler domain. In this case, the second device sends the pilot signals of the plurality of antenna ports on a same time-frequency resource. How the second device obtains the Doppler spread of each antenna port is not limited in this application.

S202: The second device sends M reference signals to the first device on a time-frequency resource of each of the $N_T$ time units. Correspondingly, the first device receives the M reference signals from the second device in each of the $N_T$ time units.

In some feasible implementations, the second device may determine M reference signals of the M antenna ports in each of the $N_T$ time units based on pilot signals corresponding to the M antenna ports and phase shifts corresponding to the M antenna ports in the time units. The second device may send the M reference signals to the first device on the time-frequency resource of each of the $N_T$ time units. To be specific, the M reference signals in each time unit occupy a same time-frequency resource. In other words, after phase rotation (phase shift) is performed, the second device may send, through one antenna port, pilot signals that originally need to be sent through the M antenna ports. It should be noted that, when a transmit end sends M reference signals to a receive end in each time unit by using a same time-frequency resource, for the receive end, a signal received by the receive end in each time unit is a superposed signal or a multiplex signal of the M reference signals.

It should be understood that both the pilot signal and the reference signal described in this embodiment of this application are signals used for channel measurement. The pilot signal may be understood as a signal that has not undergone a phase shift, and the reference signal may be understood as a signal obtained through a phase shift. For example, a signal generated by the transmit end based on a pilot sequence is referred to as a pilot signal, and a signal obtained by the transmit end by performing phase shift on the pilot signal is referred to as a reference signal.

It can be understood that the time unit described in this embodiment of this application may be understood as a symbol or a slot, or may be understood as a subframe, a radio frame, or the like. This is not limited herein. Optionally, when the time unit is a symbol, the M reference signals in this application occupy a same frequency domain resource; or when the time unit is a slot, a subframe, or a radio frame, the M reference signals in this application occupy a same time-frequency resource. It can be understood that the time-frequency domain resource described in this embodiment of this application is a time domain resource and a frequency domain resource. The time domain resource may be understood as an OFDM symbol, and the frequency domain resource may be understood as an RE. For ease of understanding, an example in which the time unit is a slot is mainly used below in this embodiment of this application for description.

It should be noted that the $N_T$ time units in this embodiment of this application may be $N_T$ time units that are evenly spaced in a radio frame. For example, assuming that $N_T$=3, the $N_T$ time units may be a slot 0, a slot 5, and a slot 10.

It should be noted that, when the first device is a terminal device and the second device is a radio access network device, a reference signal (or pilot signal) sent by the second device may be a signal that can be used for downlink channel estimation, for example, a channel state information reference signal (channel state information reference signal, CSI-RS), a demodulation reference signal (demodulation reference signal, DMRS), or a cell-specific reference signal (cell-specific reference signal, CRS). This is not limited herein. Optionally, when the first device is a radio access network device and the second device is a terminal device, a reference signal (or pilot signal) sent by the second device may be a signal that can be used for uplink channel estimation, for example, a sounding reference signal (sounding reference signal, SRS) or a DMRS. In this embodiment of this application, an example in which the first device is a terminal device, the second device is a radio access network device, and a pilot signal sent by the second device is a CSI-RS is used for description, unless otherwise specified.

It should be noted that the M reference signals in each time unit are determined based on the pilot signals corresponding to the M antenna ports and the phase shifts respectively corresponding to the M antenna ports, and $N_T$ and M are integers greater than 1. For example, the M reference signals in each time unit are signals obtained by performing mathematical operations (for example, multiplication) on the pilot signals corresponding to the M antenna ports and phase rotation factors respectively corresponding to the M antenna ports. A phase rotation factor of any antenna port in a time unit may be determined based on a phase shift corresponding to the antenna port.

For example, a reference signal corresponding to the antenna port m among the M antenna ports in a $t^{th}$ time unit among the $N_T$ time units is $s_m e^{-(t-1)\theta m j}$. Herein, the antenna port m is any one of the M antenna ports, $1 \leq t \leq N_T$, and t is an integer. $s_m$ is a pilot signal corresponding to the antenna port m, $e^{-(t-1)\theta m j}$ is a phase rotation factor corresponding to the antenna port m in the $t^{th}$ time unit among the $N_T$ time units, $\theta_m$ is a phase shift of the pilot signal corresponding to the antenna port m between adjacent time units among the $N_T$ time units, and j is an imaginary number. In an implementation, $\theta_m$ may be $\dfrac{k_m}{N_{MAX}} 2\pi$, where $k_m$ represents a cyclic shift of the antenna port m, $-N_{MAX} < k_m < N_{MAX}$ or $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. A specific value of $N_{MAX}$ may be predefined in a protocol or indicated by a base station. For example, $\theta_m$ is $\dfrac{k_m}{N_T} 2\pi$, namely, $N_{MAX} = N_T$.

For example, it is assumed that the first device is a terminal device, the second device is a radio access network device, a pilot signal sent by the radio access network device is a CSI-RS, and M=2. Therefore, the radio access network device may respectively add different phase shifts to CSI-RSs of the two antenna ports (for example, an antenna port 1 and an antenna port 2). For example, when $N_{MAX} = N_T$, Doppler domain shifts are respectively performed, by using phase rotation factors corresponding to cyclic shifts $k_1$ and $k_2$, on the CSI-RSs sent through the two antenna ports, to multiplex the CSI-RSs of the two antenna ports in Doppler domain. It can be understood that, after the CSI-RSs are multiplexed, the radio access network device may send, through one antenna port, the CSI-RSs that originally need to be sent through the two antenna ports.

Specifically, $e^{-(t-1)\frac{k_1}{N_T}2\pi j}$ represents a phase rotation factor corresponding to the antenna port 1 in a $t^{th}$ slot among $N_T$ slots, $\frac{k_1}{N_T}2\pi$ represents a phase shift of a pilot signal corresponding to the antenna port 1 between adjacent slots among the $N_T$ slots, $e^{-(t-1)\frac{k_2}{N_T}2\pi j}$ represents a phase rotation factor corresponding to the antenna port 2 in the $t^{th}$ slot among the $N_T$ slots, and $\frac{k_2}{N_T}2\pi$ represents a phase shift of a pilot signal corresponding to the antenna port 2 between adjacent slots among the $N_T$ slots. $1 \le t \le N_T$, and t is an integer.

It can be understood that, if CSI-RSs are not multiplexed in Doppler domain, received signals of CSI-RSs received by the terminal device from the two antenna ports of the radio access network device in the $t^{th}$ slot are respectively as follows:

$$y_{t,1} = h_{t,1}s_{t,1};$$

and

$$y_{t,2} = h_{t,2}s_{t,2},$$

where
$y_{t,1}$ is a received signal of a CSI-RS corresponding to the antenna port 1 in the $t^{th}$ slot (to be specific, a received signal of a CSI-RS received by the terminal device from the antenna port 1 in the $t^{th}$ slot), $y_{t,2}$ is a received signal of a CSI-RS corresponding to the antenna port 2 in the $t^{th}$ slot (to be specific, a received signal of a CSI-RS received by the terminal device from the antenna port 2 in the $t^{th}$ slot), $h_{t,1}$ is a channel corresponding to the antenna port 1 in the $t^{th}$ slot (to be specific, a precoded equivalent channel corresponding to the port 1), $h_{t,2}$ is a channel corresponding to the antenna port 2 in the $t^{th}$ slot (to be specific, a precoded equivalent channel corresponding to the port 2), $s_{t,1}$ is a pilot signal corresponding to the antenna port 1 in the $t^{th}$ slot, and $s_{t,2}$ is a pilot signal corresponding to the antenna port 2 in the $t^{th}$ slot.

After the CSI-RSs are multiplexed in Doppler domain, a multiplex signal, received by the terminal device in the $t^{th}$ slot, of a signal sent by an antenna port (for example, an antenna port 1) of the radio access network device is as follows:

$$y_t = h_{t,1}s_{t,1}e^{-\frac{(t-1)k_1}{N_T}2\pi j} + h_{t,2}s_{t,2}e^{-\frac{(t-1)k_2}{N_T}2\pi j},$$

where
$y_t$ is the multiplex signal received by the terminal device in the $t^{th}$ slot, and because the CSI-RSs are multiplexed in Doppler domain, $s_{t,1}$ and $s_{t,2}$ can be separately obtained through demodulation in a manner of filtering even if they are the same.

S203: The first device determines, based on the M reference signals corresponding to each of the $N_T$ time units and the second information, channel state information corresponding to each of the M antenna ports.

It can be understood that, for the receive end (namely, the first device), the M reference signals received by the receive end in each time unit are actually a superposed signal or a multiplex signal of the M reference signals. Therefore, the first device may determine, based on the M reference signals (to be specific, the multiplex signal of the M reference signals) corresponding to each of the $N_T$ time units and the second information, the channel state information corresponding to each of the M antenna ports. In other words, the second information may be used to assist the first device in performing Doppler domain windowing. Herein, the windowing is filtering, to distinguish, from a total received signal (namely, the multiplex signal), a received signal of a pilot signal corresponding to each antenna port. In other words, the second information may be used to assist in restoring the channel state information corresponding to each of the M antenna ports.

In some feasible implementations, that the first device determines, based on the M reference signals corresponding to each of the $N_T$ time units and the second information, the channel state information corresponding to each of the M antenna ports may be understood as follows: The first device performs DFT transformation on the multiplex signal of the M reference signals corresponding to each of the $N_T$ time units, to obtain $N_T$ Doppler domain signals, where each Doppler domain signal corresponds to one Doppler basis; then performs, based on the second information, windowing on the $N_T$ Doppler domain signals, to obtain $N_T$ windowed Doppler domain signals corresponding to each of the M antenna ports; and then determines, based on the $N_T$ windowed Doppler domain signals corresponding to each of the M antenna ports, the channel state information corresponding to each of the M antenna ports. For example, determining, based on the $N_T$ windowed Doppler domain signals corresponding to each of the M antenna ports, the channel state information corresponding to each of the M antenna ports may be understood as performing inverse DFT transformation on the $N_T$ windowed Doppler domain signals corresponding to each of the M antenna ports, to obtain $N_T$ received signals corresponding to each of the M antenna ports. Therefore, the channel state information corresponding to each antenna port may be determined based on the $N_T$ received signals corresponding to each of the M antenna ports, the pilot signal corresponding to each antenna port, and the phase shift corresponding to each antenna port.

For example, it is assumed that the first device is a terminal device, the second device is a radio access network device, a pilot signal sent by the radio access network device is a CSI-RS, and M=2. After receiving a Doppler domain multiplex signal of CSI-RSs from the radio access network device in $N_T$ slots, the terminal device may perform DFT transformation to transform the received multiplex signal of the CSI-RSs in the $N_T$ slots to Doppler domain, and then perform windowing on a signal obtained through transformation to Doppler domain (to be specific, retain only a Doppler domain signal corresponding to a corresponding Doppler basis), to distinguish a received signal of a CSI-RS corresponding to an antenna port 1 in each of the $N_T$ slots and a received signal of a CSI-RS corresponding to an antenna port 2 in each of the $N_T$ slots, that is, separately obtain $h_{t,1}s_{t,1}e^{-\frac{(t-1)k_1}{N_T}2\pi j}$ and $h_{t,2}s_{t,2}e^{-\frac{(t-1)k_2}{N_T}2\pi j}$, where $1\leq t\leq N_T$, and t is an integer. Further, $h_{t,1}$ and $h_{t,2}$ may be separately estimated based on $h_{t,1}s_{t,1}e^{-\frac{(t-1)k_1}{N_T}2\pi j}$ and $h_{t,2}s_{t,2}e^{-\frac{(t-1)k_2}{N_T}2\pi j}$ that are distinguished and known reference signals $s_{t,1}e^{-\frac{(t-1)k_1}{N_T}2\pi j}$ and $s_{t,2}e^{-\frac{(t-1)k_2}{N_T}2\pi j}$ that correspond to the antenna port 1 and the antenna port 2 in each of the $N_T$ slots, that is, channel state information that originally needs to be measured by using two antenna ports is obtained. Usually, channel state information of any antenna port m in the last one of the $N_T$ slots is channel state information that corresponds to the antenna port m and that is needed for channel measurement.

For example, performing DFT transformation to transform the received multiplex signal of the CSI-RSs in the $N_T$ slots to Doppler domain, and then performing windowing on the signal obtained through transformation to Doppler domain (to be specific, retaining only the Doppler domain signal corresponding to the corresponding Doppler basis), to distinguish the received signal of the CSI-RS corresponding to the antenna port 1 in each slot and the received signal of the CSI-RS corresponding to the antenna port 2 in each slot may be understood as follows: It is assumed that there are $N_T = 10$ multiplex signals $y_1, ... , y_{10}$ in evenly spaced slots, and DFT transformation may be performed on the 10 multiplex signals to obtain 10 samples of the multiplex signals in Doppler domain, that is, 10 Doppler domain signals: $Y_1, ... , Y_{10}$. It is assumed that sequence numbers of Doppler bases corresponding to a channel of the antenna port 1 are 1, 2, 3, 4, and 5, and sequence numbers of Doppler bases corresponding to a channel of the antenna port 2 are 6, 7, 8, 9, and 10. In this case:

For the antenna port 1, sampling parts, among $Y_1, ... , Y_{10}$, that correspond to Doppler bases with sequence numbers of 1, 2, 3, 4, and 5 may be retained (to be specific, values of $Y_1, ... , Y_5$ remain unchanged), and remaining samples are discarded (to be specific, values of $Y_6, ... , Y_{10}$ are set to 0), to obtain $N_T$ windowed Doppler domain signals corresponding to the antenna port 1. Then inverse DFT transformation may be performed on the $N_T$ windowed Doppler domain signals corresponding to the antenna port 1, to obtain $N_T$ received signals corresponding to the antenna port 1 (to be specific, a received signal of a CSI-RS corresponding to the antenna port 1 in each of the $N_T$ slots). That is, windowing may be performed on $Y_1, ... , Y_{N_T}$, and then inverse DFT transformation may be performed on $Y_1, ... , Y_{N_T}$ that is obtained through windowing, to distinguish the $N_T$ received signals corresponding to the antenna port 1:

$$h_{1,1}s_{1,1}, h_{2,1}s_{2,1}e^{-\frac{k_1}{N_T}2\pi j}, ... ... , h_{N_T,1}s_{N_T,1}e^{-\frac{(N_T-1)k_1}{N_T}2\pi j}.$$

For the antenna port 2, sampling parts, among $Y_1, ... , Y_{NT}$, that correspond to Doppler bases with sequence numbers of 6, 7, 8, 9, and 10 may be retained (to be specific, values of $Y_6, ..., Y_{10}$ remain unchanged), and remaining samples are discarded (to be specific, values of $Y_1, ..., Y_5$ are set to 0), to obtain $N_T$ windowed Doppler domain signals corresponding to the antenna port 2. Then inverse DFT transformation may be performed on the $N_T$ windowed Doppler domain signals corresponding to the antenna port 2, to obtain $N_T$ received signals corresponding to the antenna port 2 (to be specific, a received signal of a CSI-RS corresponding to the antenna port 2 in each of the $N_T$ slots). That is, windowing may be performed on $Y_1, \ldots, Y_{NT}$, and then inverse DFT transformation may be performed on $Y_1, \ldots, Y_{NT}$ that is obtained through windowing, to distinguish the $N_T$ received signals corresponding to the antenna port 2:

$$h_{1,2}s_{1,2}, h_{2,2}s_{2,2}e^{-\frac{k_2}{N_T}2\pi j}, \ldots \ldots, h_{N_T,2}s_{N_T,2}e^{-\frac{(N_T-1)k_1}{N_T}2\pi j}.$$

Further, channel state information corresponding to the antenna port 1 (that is, $h_{t,1}$, where $1 \leq t \leq N_T$, and t is an integer) may be estimated based on the distinguished received signal of the CSI-RS corresponding to the antenna port 1 in each of the $N_T$ slots (that is, $h_{t,1}s_{t,1}e^{-\frac{(t-1)k_1}{N_T}2\pi j}$, where $1 \leq t \leq N_T$, and t is an integer) and a known reference signal corresponding to the antenna port 1 in each of the $N_T$ slots (that is, $s_{t,1}e^{-\frac{(t-1)k_1}{N_T}2\pi j}$, where $1 \leq t \leq N_T$, and t is an integer). Similarly, channel state information corresponding to the antenna port 2 (that is, $h_{t,2}$, where $1 \leq t \leq N_T$, and t is an integer) may be estimated based on the distinguished received signal of the CSI-RS corresponding to the antenna port 2 in each of the $N_T$ slots (that is, $h_{t,2}s_{t,2}e^{-\frac{(t-1)k_2}{N_T}2\pi j}$, where $1 \leq t \leq N_T$, and t is an integer) and a known reference signal corresponding to the antenna port 2 in each of the $N_T$ slots (that is, $s_{t,2}e^{-\frac{(t-1)k_2}{N_T}2\pi j}$, where $1 \leq t \leq N_T$, and t is an integer).

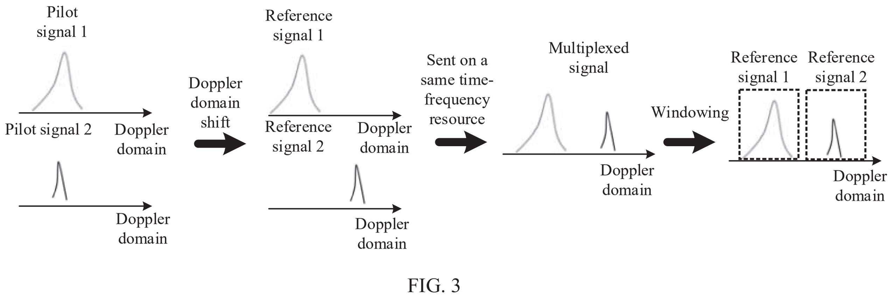

For example, FIG. 3 is a diagram of a scenario in which a pilot signal is shifted in Doppler domain according to an embodiment of this application. As shown in FIG. 3, it is assumed that there are two pilot signals: a pilot signal 1 corresponding to an antenna port 1 and a pilot signal 2 corresponding to an antenna port 2. Before a phase shift is performed (in other words, before a Doppler domain shift is performed), the pilot signal 1 corresponding to the antenna port 1 overlaps the pilot signal 2 corresponding to the antenna port 2 in Doppler domain. After a phase shift is performed (in other words, after a Doppler domain shift is performed), a reference signal 1 corresponding to the pilot signal 1 and a reference signal 2 corresponding to the pilot signal 2 may be distinguished in Doppler domain. After the radio access network device sends, by using a same time-frequency resource, the reference signal 1 and the reference signal 2 that are obtained through the phase shift, the terminal device may receive a multiplex signal including the reference signal 1 and the reference signal 2, and may extract the reference signal 1 and the reference signal 2 from the multiplex signal by performing windowing on the multiplex signal.

Optionally, the first device sends, to the second device, the channel state information corresponding to each antenna port. Correspondingly, the second device receives, from the first device, the channel state information corresponding to each antenna port.

In this embodiment of this application, the first device serves as a receive end of the reference signals, the second device serves as a transmit end of the reference signals, and the reference signals sent by the transmit end are signals obtained through the phase shift. This can ensure that Doppler spreads of different pilot signals do not overlap in Doppler domain. Therefore, the receive end may distinguish between different signals in Doppler domain based on the obtained second information. In this manner in which orthogonal multiplexing is performed on pilot signals in Doppler domain, more pilot signals can be sent on a same time-frequency resource, to improve utilization of a data transmission resource.

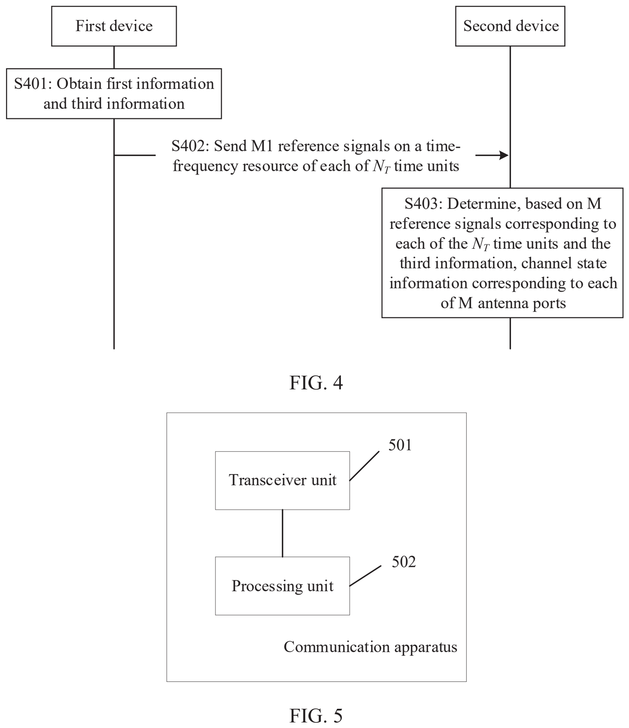

FIG. 4 is another diagram of interaction in a channel state information obtaining method according to an embodiment of this application. As shown in FIG. 4, the channel state information obtaining method includes the following steps S401 to S403. The method shown in FIG. 4 may be performed by a first device and a second device, or the method shown in FIG. 4 may be performed by a chip in a first device and a chip in a second device. It should be noted that FIG. 4 is a schematic flowchart of a method embodiment of this application, and shows detailed communication steps or operations of the method. However, these steps or operations are merely examples. Other operations or variants of various operations in FIG. 4 may alternatively be performed in embodiments of this application. In addition, the steps in FIG. 4 may be performed in an order different from an order shown in FIG. 4, and not all of the operations in FIG. 4 may be performed. In FIG. 4, an example in which the method is performed by the first device and the second device is used below for description.

S401: The first device obtains first information and third information.

The first device includes M1 antenna ports, and the first information indicates a quantity $N_T$ of time units. The third information indicates phase shifts of pilot signals corresponding to the M1 antenna ports, $N_T$ is an integer greater than 1, and M1 is an integer greater than 0. It should be understood that the M1 antenna ports are ports used by the first device to send pilot signals.

For example, in an implementation, that the first device obtains the first information may be understood as that the second device sends the first information to the first device and the first device correspondingly receives the first information from the second device; and that the first device obtains the third information may be understood as that the second device sends the third information to the first device and the first device correspondingly receives the third information from the second device. That is, at least one of the first information and the third information may be configured by the second device for the first device. Optionally, in another implementation, at least one of the first information and the third information may be predefined in a protocol or preconfigured. Optionally, the indicated quantity $N_T$ of time units that is indicated by the first information may alternatively be calculated by the first device based on a Doppler spread (this is an internal implementation of the first device), or the like. This is not limited herein. For ease of understanding, in this embodiment of this application, an example in which the first information and the third information are configured by the second device for the first device is mainly used for description.

It should be noted that, in descriptions of this embodiment of this application, performing phase shift on pilot signals of different antenna ports is equivalent to performing Doppler domain shift on pilot signals sent by different antenna ports.

It can be understood that, when the first information and the third information are configured by the second device for the first device, the first information and the third information may be carried in a same piece of signaling and sent to the first device, or the first information and the third information may be separately carried in different pieces of signaling and sent to the first device. This is not limited herein. For example, the signaling herein may be radio resource control (radio resource control, RRC) signaling or media access control control element (medium access control control element, MAC CE) signaling. This is not limited herein. Optionally, at least one of the first information and the third information may alternatively be carried in a physical uplink control channel (physical uplink control channel, PUCCH) or a physical uplink shared channel (physical uplink shared channel, PUSCH). This is not limited herein.

Optionally, the third information may specifically include at least one of the following information.

1. The quantity M1 of antenna ports. For example, it is assumed that $N_T$=10. The third information includes that the quantity M1 of antenna ports is 2. In addition, it is predefined in a protocol that a starting sequence number of Doppler bases corresponding to the 1st port is 1 and quantities of sequence numbers of Doppler bases corresponding to all ports are the same. In this case, sequence numbers of Doppler bases corresponding to a channel of a port 1 are 1, 2, 3, 4, and 5, and sequence numbers of Doppler bases corresponding to a channel of a port 2 are 6, 7, 8, 9, and 10.

2. A cyclic shift of each of the M1 antenna ports. For example, it is assumed that $N_T$=10. The second information includes that a cyclic shift of a port 1 is $k_1$ and a cyclic shift of a port 2 is $k_2$. Therefore, it can be learned that a phase shift $\theta_1$ of the port 1 is $\dfrac{k_1}{N_{MAX}} 2\pi$ and a phase shift $\theta_2$ of the port 2 is $\dfrac{k_2}{N_{MAX}} 2\pi$, where $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. A specific value of $N_{MAX}$ may be predefined in a protocol or indicated by the second device. In addition, a value range of $k_m$ may alternatively be $-N_{MAX} < k_m < N_{MAX}$.

It should be noted that, because a value range of a phase shift of a pilot signal corresponding to any antenna port is $[0,2\pi)$, when $-N_{MAX} < k_m \leq 0$, a corresponding phase shift may be mapped to the range of $[0,2\pi)$ by adding $2\pi$ to the phase shift.

3. A phase shift of a pilot signal corresponding to each of the M1 antenna ports. For example, it is assumed that $N_T$=10. The second information includes that a phase shift corresponding to a port 1 is 0 and a phase shift corresponding to a port 2 is $\pi$.

4. Indication information of a sequence number of a Doppler domain basis corresponding to a channel of each of the M1 antenna ports. A sequence number of a Doppler basis is used to identify the Doppler basis. It should be understood that the sequence number may alternatively be an index, a bitmap, or the like. This is not limited in this application. It can be understood that a sequence number of a Doppler basis corresponding to a channel of each antenna port and a phase shift corresponding to each antenna port may be converted into each other (derived based on each other). To be specific, the phase shift corresponding to each antenna port may be determined (derived) based on the sequence number of the Doppler basis corresponding to the channel of each antenna port, or the sequence number of the Doppler basis corresponding to the channel of each antenna port may be determined based on the phase shift corresponding to each antenna port. For example, $\theta_m = \dfrac{2\pi}{N_T} R_m$, where $\theta_m$ is a phase shift of a pilot signal corresponding to an antenna port m between adjacent time units among the $N_T$ time units. It should be understood that phase shifts between all adjacent time units are the same. $R_m$ is a shift value or a variation value of a sequence number of a Doppler basis corresponding to a channel of the antenna port m.

For example, it is assumed that $N_T$=10. The second information may include sequence numbers 1, 2, and 3 of Doppler bases corresponding to a channel of a port 1, and sequence numbers 7, 8, and 9 of Doppler bases corresponding to a channel of a port 2. In addition, the first device detects, by using another reference signal (for example, a TRS), that initial sequence numbers of Doppler bases corresponding to the channel of the port 1 are 1, 2, and 3, and initial sequence numbers of Doppler bases corresponding to the port 2 are 2, 3, and 4. In this case, it can be determined that a shift value of the sequence numbers of the Doppler bases corresponding to the channel of the port 1 is 0, and a shift value of the sequence numbers of the Doppler bases corresponding to the channel of the port 2 is 5. Therefore, it can be determined that a phase shift corresponding to the port 1 is 0 (that is, $0 = \frac{2\pi}{N_T} \times 0$), and a phase shift corresponding to the port 2 is $\pi$

(that is, $\pi = \frac{2\pi}{N_T} \times 5$).

It should be noted that there may be one or more first devices in descriptions of this embodiment of this application, and a sum of quantities of antenna ports included in the one or more first devices is equal to M, where M is an integer greater than 1. For example, when there is one first device, the first device includes M antenna ports (that is, M1=M). For another example, when there are a plurality of first devices, each first device may include one or more antenna ports, and a sum of quantities of antenna ports included in all of the first devices is equal to M (that is, M1<M). Therefore, when the third information is configured by the second device for the first device, the second device may send one or more pieces of third information, where each piece of third information corresponds to one first device, and a sum of quantities of antenna ports associated with all of the third information is equal to M.

For example, it is assumed that the first device is a terminal device, the second device is a radio access network device, and M=5. When there is one first device, for example, a terminal device 1, the terminal device 1 may include five antenna ports (that is, M1=M=5). Therefore, the radio access network device may send one piece of third information to the terminal device 1. The third information indicates a phase shift of a pilot signal corresponding to each of the five antenna ports included in the terminal device 1. When there are a plurality of first devices, for example, a terminal device 1, a terminal device 2, and a terminal device 3, the terminal device 1 may include one antenna port (to be specific, for the terminal device 1, M1=1), the terminal device 2 may include two antenna ports (to be specific, for the terminal device 2, M1=2), and the terminal device 3 may include two antenna ports (to be specific, for the terminal device 3, M1=2). Therefore, the radio access network device may send three pieces of third information. One piece of third information indicates a phase shift of a pilot signal corresponding to one antenna port included in the terminal device 1, one piece of third information indicates a phase shift of a pilot signal corresponding to each of the two antenna ports included in the terminal device 2, and one piece of third information indicates a phase shift of a pilot signal corresponding to each of the two antenna ports included in the terminal device 3.

S402: The first device sends M1 reference signals to the second device on a time-frequency resource of each of $N_T$ time units. Correspondingly, the second device receives the M1 reference signals in each of the $N_T$ time units.

It should be noted that, when M1<M, step S402 may be performed by a plurality of first devices, so that the second device receives the M reference signals. To be specific, a sum of quantities of antenna ports included in the plurality of first devices is equal to M. Optionally, quantities of antenna ports included in different first devices among the plurality of first devices may be the same or different. This is not limited herein.

It should be understood that both the pilot signal and the reference signal described in this embodiment of this application are signals used for channel measurement. The pilot signal may be understood as a signal that has not undergone a phase shift, and the reference signal may be understood as a signal obtained through a phase shift. For example, a signal generated by a transmit end based on a pilot sequence is referred to as a pilot signal, and a signal obtained by the transmit end by performing phase shift on the pilot signal is referred to as a reference signal.

It can be understood that the time unit described in this embodiment of this application may be understood as a symbol or a slot, or may be understood as a subframe, a radio frame, or the like. This is not limited herein. Optionally, when the time unit is a symbol, the M reference signals in this application occupy a same frequency domain resource; or when the time unit is a slot, a subframe, or a radio frame, the M reference signals in this application occupy a same time-frequency resource. It can be understood that the time-frequency domain resource described in this embodiment of this application is a time domain resource and a frequency domain resource. The time domain resource may be understood as an OFDM symbol, and the frequency domain resource may be understood as an RE. For ease of understanding, an example in which the time unit is a slot is mainly used below in this embodiment of this application for description.

It should be noted that the $N_T$ time units in this embodiment of this application may be $N_T$ time units that are evenly spaced in a radio frame. For example, assuming that $N_T$=3, the $N_T$ time units may be a slot 0, a slot 5, and a slot 10.

It should be noted that, when the first device is a terminal device and the second device is an access network device, a reference signal (or a pilot signal) sent by the first device may be a signal that can be used for uplink channel estimation, for example, an SRS or a DMRS. This is not limited herein. Optionally, when the first device is an access network device and the second device is a terminal device, a reference signal sent by the first device may be a signal that can be used for downlink channel estimation, for example, a CSI-RS, a DMRS, or a CRS. In descriptions of this embodiment of this application, the first device may be understood as a terminal device, the second device may be understood as an access network device, and a reference signal sent by the first device may be understood as an SRS, unless otherwise specified.

It should be noted that M reference signals in each time unit are determined based on pilot signals corresponding to the M antenna ports and phase shifts respectively corresponding to the M antenna ports, and $N_T$ and M are integers greater than 1. For example, the M reference signals in each time unit are signals obtained by performing mathematical operations (for example, multiplication) on the pilot signals corresponding to the M antenna ports and phase rotation factors respectively corresponding to the M antenna ports. A phase rotation factor of any antenna port in a time unit may be determined based on a phase shift corresponding to the antenna port.

For example, a reference signal corresponding to the antenna port m among the M antenna ports in a $t^{th}$ time unit among the $N_T$ time units is $s_m e^{-(t-1)\theta mj}$. Herein, the antenna port m is any one of the M antenna ports, $1 \le t \le N_T$, and t is an integer. $s_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal corresponding to the antenna port m between adjacent time units among the $N_T$ time units, and j is an imaginary number. In an implementation, $\theta_m$ may be $\frac{k_m}{N_{MAX}} 2\pi$, where $k_m$ represents a cyclic shift of the antenna port m, $-N_{MAX} < k_m < N_{MAX}$ or $0 \le k_m < N_{MAX}$ or $-N_{MAX} < k_m \le 0$, $k_m$ is an integer, $N_{MAX}$ represents a maximum quantity of signals to be multiplexed, $0 < N_{MAX} \le N_T$, and $N_{MAX}$ is an integer. A specific value of $N_{MAX}$ may be predefined in a protocol or indicated by a base station. For example, $\theta_m$ is $\frac{k_m}{N_T} 2\pi$, namely, $N_{MAX} = N_T$.

For example, it is assumed that the first device is a terminal device (for example, a terminal device 1 and a terminal device 2), the second device is a radio access network device, and one terminal device includes one antenna port. For example, the terminal device 1 includes an antenna port 1, and the terminal device 2 includes an antenna port 2. A pilot signal sent by the terminal device is an SRS. The terminal device 1 and the terminal device 2 may respectively perform, by using phase rotation factors corresponding to cyclic shifts $k_1$ and $k_2$, Doppler domain shift on SRSs sent by the terminal device 1 and the terminal device 2, to multiplex the SRSs of the two terminal devices.

Specifically, assuming that $N_{MAX} = N_T$, $e^{-(t-1)\frac{k_1}{N_T}2\pi j}$ represents a phase rotation factor corresponding to the antenna port 1 of the terminal device 1 in a $t^{th}$ slot among $N_T$ slots, $\frac{k_1}{N_T} 2\pi$ represents a phase shift of a reference signal corresponding to the antenna port 1 of the terminal device 1 between adjacent slots among the $N_T$ slots, $e^{-(t-1)\frac{k_2}{N_T}2\pi j}$ represents a phase rotation factor corresponding to the antenna port 2 of the terminal device 2 in the $t^{th}$ slot among the $N_T$ slots, and $\frac{k_2}{N_T} 2\pi$ represents a phase shift of a reference signal corresponding to the antenna port 2 of the terminal device 2 between adjacent slots among the $N_T$ slots. $1 \le t \le N_T$, and t is an integer.

It can be understood that, if SRSs are not multiplexed, received signals of SRSs received by the radio access network device from the antenna port 1 of the terminal device 1 and the antenna port 2 of the terminal device 2 in the $t^{th}$ slot are respectively as follows:

$$y_{t,1} = h_{t,1} s_{t,1};$$

and

$$y_{t,2} = h_{t,2} s_{t,2},$$

where

$y_{t,1}$ is a received signal of an SRS received by the radio access network device from the antenna port 1 of the terminal device 1 in the $t^{th}$ slot, $y_{t,2}$ is a received signal of an SRS received by the radio access network device from the antenna port 2 of the terminal device 2 in the $t^{th}$ slot, $h_{t,1}$ is a channel corresponding to the antenna port 1 of the terminal device 1 in the $t^{th}$ slot, $h_{t,2}$ is a channel corresponding to the antenna port 2 of the terminal device 2 in the $t^{th}$ slot, $s_{t,1}$ is a pilot signal corresponding to the antenna port 1 of the terminal device 1 in the $t^{th}$ slot, and $s_{t,2}$ is a pilot signal corresponding to the antenna port 2 of the terminal device 2 in the $t^{th}$ slot.

In this case, after the SRSs are multiplexed in Doppler domain, a multiplex signal, received by the radio access network device in the $t^{th}$ slot, of signals sent by the terminal device 1 and the terminal device 2 by using a same time-frequency resource is as follows:

$$y_t = h_{t,1} s_{t,1} e^{-\frac{(t-1)k_1}{N_T}2\pi j} + h_{t,2} s_{t,2} e^{-\frac{(t-1)k_2}{N_T}2\pi j},$$

where

$y_t$ is the multiplex signal received by the radio access network device in the $t^{th}$ slot, $h_{t,1}$ is the channel corresponding to the antenna port 1 of the terminal device 1 in the $t^{th}$ slot, $h_{t,2}$ is the channel corresponding to the antenna port 2 of the terminal device 2 in the $t^{th}$ slot, $s_{t,1}$ is the pilot signal corresponding to the antenna port 1 of the terminal device 1 in the $t^{th}$ slot, and $s_{t,2}$ is the pilot signal corresponding to the antenna port 2 of the terminal device 2 in the $t^{th}$ slot (because the SRSs are multiplexed, $s_{t,1}$ and $s_{t,2}$ may be the same).

Optionally, it is assumed that the first device is a terminal device (for example, a terminal device 1), the second device is a radio access network device, and the terminal device 1 includes an antenna port 1 and an antenna port 2. A reference signal sent by the terminal device 1 is an SRS. The terminal device 1 may respectively perform, by using phase rotation factors corresponding to cyclic shifts $k_1$ and $k_2$, Doppler domain shift on SRSs sent by the terminal device 1 through the antenna port 1 and the antenna port 2, to multiplex the SRSs of the two antenna ports of the terminal device. It can be understood that, for an SRS multiplexing mode in a case in which one terminal device 1 includes two antenna ports, reference may be made to the foregoing SRS multiplexing mode for two terminal devices. Details are not described herein again.

For another example, it is assumed that the first device is a terminal device (for example, a terminal device 1 and a terminal device 2), the second device is a radio access network device, and one terminal device includes two antenna ports (to be specific, each terminal device includes two antenna ports). For example, the terminal device 1 includes an antenna port 1 and an antenna port 2, and the terminal device 2 includes an antenna port 3 and an antenna port 4. A pilot signal sent by the terminal device is an SRS. The terminal device 1 may respectively perform, by using phase rotation factors corresponding to cyclic shifts $k_1$ and $k_2$, Doppler domain shift on SRSs sent by the terminal device 1 through the antenna port 1 and the antenna port 2, and the terminal device 2 may respectively perform, by using phase rotation factors corresponding to cyclic shifts $k_3$ and $k_4$, Doppler domain shift on SRSs sent by the terminal device 2 through the antenna port 3 and the antenna port 4, to multiplex the SRSs of the two terminal devices.

Specifically, assuming that $N_{MAX} = N_T$, $e^{-(t-1)\frac{k_1}{N_T}2\pi j}$ represents a phase rotation factor corresponding to the antenna port 1 of the terminal device 1 in a $t^{th}$ slot among $N_T$ slots, $\frac{k_1}{N_T}2\pi$ represents a phase shift of a reference signal corresponding to the antenna port 1 of the terminal device 1 between adjacent slots among the $N_T$ slots, $e^{-(t-1)\frac{k_2}{N_T}2\pi j}$ represents a phase rotation factor corresponding to the antenna port 2 of the terminal device 1 in the $t^{th}$ slot among the $N_T$ slots, $\frac{k_2}{N_T}2\pi$ represents a phase shift of a reference signal corresponding to the antenna port 2 of the terminal device 1 between adjacent slots among the $N_T$ slots, $e^{-(t-1)\frac{k_3}{N_T}2\pi j}$ represents a phase rotation factor corresponding to the antenna port 3 of the terminal device 2 in the $t^{th}$ slot among the $N_T$ slots, $\frac{k_3}{N_T}2\pi$ represents a phase shift of a reference signal corresponding to the antenna port 3 of the terminal device 2 between adjacent slots among the $N_T$ slots, $e^{-(t-1)\frac{k_4}{N_T}2\pi j}$ represents a phase rotation factor corresponding to the antenna port 4 of the terminal device 2 in the $t^{th}$ slot among the $N_T$ slots, and $\frac{k_4}{N_T}2\pi$ represents a phase shift of a reference signal corresponding to the antenna port 4 of the terminal device 2 between adjacent slots among the $N_T$ slots. $1 \leq t \leq N_T$, and t is an integer.

It can be understood that, if SRSs are not multiplexed, received signals, received by the radio access network device in the $t^{th}$ slot, of SRS signals that are sent by the terminal device 1 and the antenna port 2, and the antenna port 3 and the antenna port 4 of the terminal device 2 are respectively as follows:

$$y_{t,1} = h_{t,1}s_{t,1};$$

$$y_{t,2} = h_{t,2}s_{t,2};$$

$$y_{t,3} = h_{t,3}s_{t,3};$$

and

$$y_{t,4} = h_{t,4}s_{t,4},$$

where

$y_{t,1}$ is a received signal of an SRS received by the radio access network device from the antenna port 1 of the terminal device 1 in the t$^{th}$ slot, $y_{t,2}$ is a received signal of an SRS received by the radio access network device from the antenna port 2 of the terminal device 1 in the t$^{th}$ slot, $y_{t,3}$ is a received signal of an SRS received by the radio access network device from the antenna port 3 of the terminal device 2 in the t$^{th}$ slot, $y_{t,4}$ is a received signal of an SRS received by the radio access network device from the antenna port 4 of the terminal device 2 in the t$^{th}$ slot, $h_{t,1}$ is a channel corresponding to the antenna port 1 in the t$^{th}$ slot (to be specific, a precoded equivalent channel corresponding to the port 1), $h_{t,2}$ is a channel corresponding to the antenna port 1 in the t$^{th}$ slot (to be specific, a precoded equivalent channel corresponding to the port 2), $h_{t,3}$ is a channel corresponding to the antenna port 3 in the t$^{th}$ slot (to be specific, a precoded equivalent channel corresponding to the port 3), $h_{t,4}$ is a channel corresponding to the antenna port 4 in the t$^{th}$ slot (to be specific, a precoded equivalent channel corresponding to the port 4), $s_{t,1}$ is a pilot signal corresponding to the antenna port 1 of the terminal device 1 in the t$^{th}$ slot, $s_{t,2}$ is a pilot signal corresponding to the antenna port 2 of the terminal device 1 in the t$^{th}$ slot, $s_{t,3}$ is a pilot signal corresponding to the antenna port 3 of the terminal device 2 in the t$^{th}$ slot, and $s_{t,4}$ is a pilot signal corresponding to the antenna port 4 of the terminal device 2 in the t$^{th}$ slot.

In this case, after the SRSs are multiplexed in Doppler domain, a multiplex signal, received by the radio access network device in the t$^{th}$ slot, of signals sent by the terminal device 1 and the terminal device 2 by using a same time-frequency resource is as follows:

$$y_t = h_{t,1}s_{t,1}e^{-\frac{(t-1)k_1}{N_T}2\pi j} + h_{t,2}s_{t,2}e^{-\frac{(t-1)k_2}{N_T}2\pi j} + h_{t,3}s_{t,3}e^{-\frac{(t-1)k_3}{N_T}2\pi j} +$$

$$h_{t,4}s_{t,4}e^{-\frac{(t-1)k_4}{N_T}2\pi j}, \text{ where}$$

$y_t$ is the multiplex signal received by the radio access network device in the t$^{th}$ slot, $h_{t,1}$ is the channel corresponding to the antenna port 1 in the t$^{th}$ slot (to be specific, the precoded equivalent channel corresponding to the port 1), $h_{t,2}$ is the channel corresponding to the antenna port 1 in the t$^{th}$ slot (to be specific, the precoded equivalent channel corresponding to the port 2), $h_{t,3}$ is the channel corresponding to the antenna port 3 in the t$^{th}$ slot (to be specific, the precoded equivalent channel corresponding to the port 3), $h_{t,4}$ is the channel corresponding to the antenna port 4 in the t$^{th}$ slot (to be specific, the precoded equivalent channel corresponding to the port 4), $s_{t,1}$ is the pilot signal corresponding to the antenna port 1 of the terminal device 1 in the t$^{th}$ slot, $s_{t,2}$ is the pilot signal corresponding to the antenna port 2 of the terminal device 1 in the t$^{th}$ slot, $s_{t,3}$ is the pilot signal corresponding to the antenna port 3 of the terminal device 2 in the t$^{th}$ slot, and $s_{t,4}$ is the pilot signal corresponding to the antenna port 4 of the terminal device 2 in the t$^{th}$ slot. Because the SRSs are multiplexed in Doppler domain, $s_{t,1}$, $s_{t,2}$, $s_{t,3}$, and $s_{t,4}$ can be separately obtained through demodulation even if they are the same.

For ease of understanding, an example in which one terminal device includes one antenna port is mainly used below in this embodiment of this application for description.

S403: The second device determines, based on the M reference signals corresponding to each of the $N_T$ time units and the third information, channel state information corresponding to each of the M antenna ports.

It can be understood that, for a receive end (namely, the second device), the M reference signals received by the receive end in each time unit are actually a superposed signal or a multiplex signal of the M reference signals. Therefore, the second device may determine, based on the M reference signals (to be specific, the multiplex signal of the M reference signals) corresponding to each of the $N_T$ time units and the third information, the channel state information corresponding to each of the M antenna ports. In other words, the third information may be used to assist the second device in performing Doppler domain windowing, namely, filtering, to distinguish, from a total received signal (namely, the multiplex signal), a received signal of a reference signal corresponding to each antenna port. In other words, the third information may be used to assist in restoring the channel state information corresponding to each of the M antenna ports. A phase shift, indicated by the third information, of the reference signal corresponding to each antenna port, and a Doppler basis that corresponds to a channel of each antenna port and that is indicated by the second information may be derived based on each other. Therefore, that the second device determines, based on the M reference signals corresponding to each of the $N_T$ time units and the third information, the channel state information corresponding to each of the M antenna ports may also be understood as follows: The second device determines, based on the M reference signals corresponding to each of the $N_T$ time units and the second information, the channel state information corresponding to each of the M antenna ports.

In some feasible implementations, that the second device determines, based on the M reference signals corresponding to each of the $N_T$ time units and the second information, the channel state information corresponding to each of the M antenna ports may be understood as follows: The second device performs DFT transformation on the multiplex signal of the M reference signals corresponding to each of the $N_T$ time units, to obtain $N_T$ Doppler domain signals, where each Doppler domain signal corresponds to one Doppler basis; then performs, based on the second information, windowing on the $N_T$ Doppler domain signals, to obtain $N_T$ windowed Doppler domain signals corresponding to each of the M antenna ports; and then determines, based on the $N_T$ windowed Doppler domain signals corresponding to each of the M antenna ports, the channel state information corresponding to each of the M antenna ports. For example, determining, based on the $N_T$ windowed Doppler domain signals corresponding to each of the M antenna ports, the channel state information corresponding to each of the M antenna ports may be understood as performing inverse DFT transformation on the $N_T$ windowed Doppler domain signals corresponding to each of the M antenna ports, to obtain $N_T$ received signals corresponding to each of the M antenna ports. Therefore, the channel state information corresponding to each antenna port may be determined based on the $N_T$ received signals corresponding to each of the M antenna ports, the pilot signal corresponding to each antenna port, and the phase shift corresponding to each antenna port.

For example, it is assumed that the first device is a terminal device (for example, a terminal device 1 and a terminal device 2), the second device is a radio access network device, and one terminal device includes one antenna port. For example, the terminal device 1 includes an antenna port 1, and the terminal device 2 includes an antenna port 2. A reference signal sent by the terminal device is an SRS. After receiving, in $N_T$ slots, a multiplex signal of SRSs sent by the antenna port 1 of the terminal device 1 and the antenna port 2 of the terminal device 2, the radio access network device may perform DFT transformation to transform the received multiplex signal of the SRSs in the $N_T$ slots to Doppler domain, and then perform windowing on a signal obtained through transformation to Doppler domain (to be specific, retain only a Doppler domain signal corresponding to a corresponding Doppler basis), to distinguish a received signal of an SRS corresponding to the antenna port 1 of the terminal device 1 in each of the $N_T$ slots and a received signal of an SRS corresponding to the antenna port 2 of the terminal device 2 in each of the $N_T$ slots, that is, separately obtain

$$h_{t,1}s_{t,1}e^{-\frac{(t-1)k_1}{N_T}2\pi j} \text{ and } h_{t,2}s_{t,2}e^{-\frac{(t-1)k_2}{N_T}2\pi j}, \text{ where } 1\leq t\leq N_T, \text{ and } t \text{ is an integer. Further, } h_{t,1} \text{ and } h_{t,2} \text{ may be}$$

separately estimated based on $h_{t,1}s_{t,1}e^{-\frac{(t-1)k_1}{N_T}2\pi j}$ and $h_{t,2}s_{t,2}e^{-\frac{(t-1)k_2}{N_T}2\pi j}$ that are distinguished and known reference signals $s_{t,1}e^{-\frac{(t-1)k_1}{N_T}2\pi j}$ and $s_{t,2}e^{-\frac{(t-1)k_2}{N_T}2\pi j}$ that correspond to the antenna port 1 of the terminal device 1 and the antenna port 2 of the terminal device 2 in each of the $N_T$ slots, that is, channel state information that originally needs to be measured by using two antenna ports is obtained. Usually, channel state information of any antenna port m in the last one of the $N_T$ slots is channel state information that corresponds to the antenna port m and that is needed for channel measurement.

For example, performing DFT transformation to transform the received multiplex signal of the SRSs in the $N_T$ slots to Doppler domain, and then performing windowing on the signal obtained through transformation to Doppler domain, to distinguish the received signal of the SRS corresponding to the antenna port 1 of the terminal device 1 in each slot and the received signal of the SRS corresponding to the antenna port 2 of the terminal device 2 in each slot may be understood as follows: It is assumed that there are $N_T$ = 10 multiplex signals $y_1,...,y_{10}$ in evenly spaced slots, and DFT transformation may be performed on the 10 multiplex signals to obtain 10 samples of the multiplex signals in Doppler domain, that is, 10 Doppler domain signals: $Y_1, ... , Y_{10}$. It is assumed that sequence numbers of Doppler bases corresponding to a channel of the antenna port 1 of the terminal device 1 are 1, 2, 3, 4, and 5, and sequence numbers of Doppler bases corresponding to a channel of the antenna port 2 of the terminal device 2 are 6, 7, 8, 9, and 10. In this case:

For the antenna port 1 of the terminal device 1, sampling parts, among $Y_1, ... , Y_{10}$, that correspond to Doppler bases with sequence numbers of 1, 2, 3, 4, and 5 may be retained (to be specific, values of $Y_1, ... , Y_5$ remain unchanged), and remaining samples are discarded (to be specific, values of $Y_6, ... , Y_{10}$ are set to 0), to obtain $N_T$ windowed Doppler domain signals corresponding to the antenna port 1. Then inverse DFT transformation may be performed on the $N_T$ windowed Doppler domain signals corresponding to the antenna port 1, to obtain $N_T$ received signals corresponding to the antenna port 1 (to be specific, a received signal of an SRS corresponding to the antenna port 1 in each of the $N_T$ slots). That is, windowing may be performed on $Y_1, ... , Y_{N_T}$, and then inverse DFT transformation may be performed on $Y_1, ... , Y_{N_T}$ that is obtained through windowing, to distinguish the $N_T$ received signals corresponding to the antenna port 1:

$$h_{1,1}s_{1,1}, h_{2,1}s_{2,1}e^{-\frac{k_1}{N_T}2\pi j}, ... ... , h_{N_T,1}s_{N_T,1}e^{-\frac{(N_T-1)k_1}{N_T}2\pi j}.$$

For the antenna port 2 of the terminal device 2, sampling parts, among $Y_1, ... , Y_{N_T}$, that correspond to Doppler bases with sequence numbers of 6, 7, 8, 9, and 10 may be retained (to be specific, values of $Y_6, ... , Y_{10}$ remain unchanged), and remaining samples are discarded (to be specific, values of $Y_1, ... , Y_5$ are set to 0), to obtain $N_T$ windowed Doppler domain signals corresponding to the antenna port 2. Then inverse DFT transformation may be performed on the $N_T$ windowed Doppler domain signals corresponding to the antenna port 2, to obtain $N_T$ received signals corresponding to the antenna port 2 (to be specific, a received signal of an SRS corresponding to the antenna port 2 in each of the $N_T$ slots). That is, windowing may be performed on $Y_1, \dots, Y_{N_T}$ and then inverse DFT transformation may be performed on $Y_1, \dots, Y_{N_T}$, that is obtained through windowing, to distinguish the $N_T$ received signals corresponding to the antenna port 2:

$$h_{1,2}s_{1,2}, h_{2,2}s_{2,2}e^{-\frac{k_2}{N_T}2\pi j}, \dots \dots, h_{N_T,2}s_{N_T,2}e^{-\frac{(N_T-1)k_1}{N_T}2\pi j}.$$

Further, channel state information corresponding to the antenna port 1 (that is, $h_{t,1}$, where $1 \leq t \leq N_T$, and t is an integer) may be estimated based on the distinguished received signal of the SRS corresponding to the antenna port 1 in each of the $N_T$ slots (that is, $h_{t,1}s_{t,1}e^{-\frac{(t-1)k_1}{N_T}2\pi j}$, where $1 \leq t \leq N_T$, and t is an integer) and a known reference signal corresponding to the antenna port 1 in each of the $N_T$ slots (that is, $s_{t,1}e^{-\frac{(t-1)k_1}{N_T}2\pi j}$, where $1 \leq t \leq N_T$). Similarly, channel state information corresponding to the antenna port 2 (that is, $h_{t,2}$, where $1 \leq t \leq N_T$, and t is an integer) may be estimated based on the distinguished received signal of the SRS corresponding to the antenna port 2 in each of the $N_T$ slots (that is, $h_{t,2}s_{t,2}e^{-\frac{(t-1)k_2}{N_T}2\pi j}$, where $1 \leq t \leq N_T$, and t is an integer) and a known reference signal corresponding to the antenna port 2 in each of the $N_T$ slots (that is, $s_{t,2}e^{-\frac{(t-1)k_2}{N_T}2\pi j}$, where $1 \leq t \leq N_T$).

In this embodiment of this application, the first device serves as a transmit end of the reference signals, the second device serves as a receive end of the reference signals, and the transmit end performs phase shift on a to-be-sent pilot signal based on the obtained third information. This can ensure that Doppler spreads of different pilot signals do not overlap in Doppler domain. Therefore, the receive end may distinguish between different signals in Doppler domain. In this manner in which orthogonal multiplexing is performed on pilot signals in Doppler domain, more pilot signals can be sent on a same time-frequency resource, to improve utilization of a data transmission resource.

A communication apparatus provided in this application is described below in detail with reference to FIG. 5 to FIG. 8. It can be understood that, in the foregoing implementations, to implement the foregoing functions, each device includes a corresponding hardware structure and/or software module for performing each function. A person skilled in the art should easily be aware that, in combination with units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, another division manner may be used.

FIG. 5 is a diagram of a structure of a communication apparatus according to an embodiment of this application. The communication apparatus shown in FIG. 5 may be configured to perform some or all functions of the first device in the method embodiments described in FIG. 2 to FIG. 4. The apparatus may be the first device, an apparatus in the first device, or an apparatus that can be used with the first device. Alternatively, the communication apparatus may be a chip or a chip system. The communication apparatus shown in FIG. 5 may include a transceiver unit 501 and a processing unit 502. The processing unit 502 is configured to process data. The transceiver unit 501 is integrated with a receiving unit and a sending unit. The transceiver unit 501 may also be referred to as a communication unit. Alternatively, the transceiver unit 501 may be split into a receiving unit and a sending unit. Optionally, the transceiver unit 501 may alternatively have a function of obtaining information. Descriptions of the processing unit and the transceiver unit below are similar. Details are not described below again.

In an implementation:

The transceiver unit 501 is configured to obtain first information and second information, where the first information indicates a quantity $N_T$ of time units, and the second information indicates a Doppler basis corresponding to a channel of each of M antenna ports;

the transceiver unit 501 is configured to receive, in each of the $N_T$ time units, M reference signals from a second device, where the M reference signals occupy a same time-frequency resource, the M reference signals are determined based on a pilot signal and a phase shift of each of the M antenna ports, and $N_T$ and M are integers greater than 1; and the processing unit 502 is configured to determine, based on the M reference signals and the second information, channel state information corresponding to each of the M antenna ports.

In a possible implementation, the second information includes any one of the following information:

indication information of a sequence number of the Doppler basis corresponding to the channel of each of the M antenna ports; and
indication information of the phase shift corresponding to each of the M antenna ports.

In a possible implementation, the indication information of the phase shift corresponding to each of the M antenna ports includes any one of the following information:

indication information of a cyclic shift of each of the M antenna ports;
indication information of the quantity M of antenna ports; and
a phase shift of the pilot signal of each of the M antenna ports.

In a possible implementation, when obtaining the first information, the transceiver unit 501 is configured to: receive the first information from the second device.

In a possible implementation, when obtaining the second information, the transceiver unit 501 is configured to: receive the second information from the second device.

In a possible implementation, a reference signal of an antenna port m among the M antenna ports in a $t^{th}$ time unit among the $N_T$ time units includes $s_m e^{-(t-1)\theta m j}$, where the antenna port m is any one of the M antenna ports, $1 \leq t \leq N_T$, and t is an integer; and

$s_m$ is a pilot signal of the antenna port m, $e^{-(t-1)\theta m j}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

In a possible implementation, $\theta_m$ is $\frac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$ namely, $N_{MAX} = N_T$.

In a possible implementation, $\theta_m$ is $\frac{k_m}{N_{MAX}} 2\pi$, where $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer. For example, $\theta_m$ is $\frac{k_m}{N_T} 2\pi$, namely, $N_{MAX} = N_T$.

In a possible implementation, the transceiver unit 501 is further configured to: send, to the second device, the channel state information corresponding to each antenna port.

In another implementation:

The transceiver unit 501 is configured to obtain first information and third information, where the first information indicates a quantity $N_T$ of time units, the third information indicates a phase shift of a reference signal corresponding to each of the M1 antenna ports, and $N_T$ is an integer greater than 1; and the transceiver unit 501 is configured to send the one or more reference signals to a second device on a time-frequency resource of each of the $N_T$ time units, where the one or more reference signals in each time unit is/are determined based on pilot signals corresponding to the M1 antenna ports and phase shifts respectively corresponding to the M1 antenna ports.

In a possible implementation, the third information includes any one of the following information:

the quantity M1 of antenna ports;

**EP 4 648 338 A1**

a cyclic shift of each of the M1 antenna ports;

the phase shift of the reference signal corresponding to each of the M1 antenna ports; and

indication information of a sequence number of a Doppler domain basis corresponding to a channel of each of the M1 antenna ports.

In a possible implementation, when obtaining the first information, the transceiver unit 501 is configured to: receive, by the transceiver unit 501, the first information from the second device.

In a possible implementation, when obtaining the third information, the transceiver unit 501 is configured to: receive, by the transceiver unit 501, the third information from the second device.

In a possible implementation, a reference signal of an antenna port m among the M1 antenna ports in a $t^{th}$ time unit among the $N_T$ time units includes $s_m e^{-(t-1)\theta m j}$, where the antenna port m is any one of the M1 antenna ports, $1 \le t \le N_T$, and t is an integer; and

$s_m$ is a pilot signal of the antenna port m, $e^{-(t-1)\theta m j}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

In a possible implementation, $\theta_m$ is $\dfrac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\dfrac{k_m}{N_T} 2\pi$, namely, $N_{MAX} = N_T$.

In a possible implementation, $\theta_m$ is $\dfrac{k_m}{N_{MAX}} 2\pi$, where $k_m$ represents a cyclic shift of the antenna port m, $0 \le k_m < N_{MAX}$ or $-N_{MAX} < k_m \le 0$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\dfrac{k_m}{N_T} 2\pi$, namely, $N_{MAX} = N_T$.

For other possible implementations of the communication apparatus, refer to related descriptions of the functions of the first device in the method embodiments corresponding to FIG. 2 to FIG. 4. Details are not described herein again.

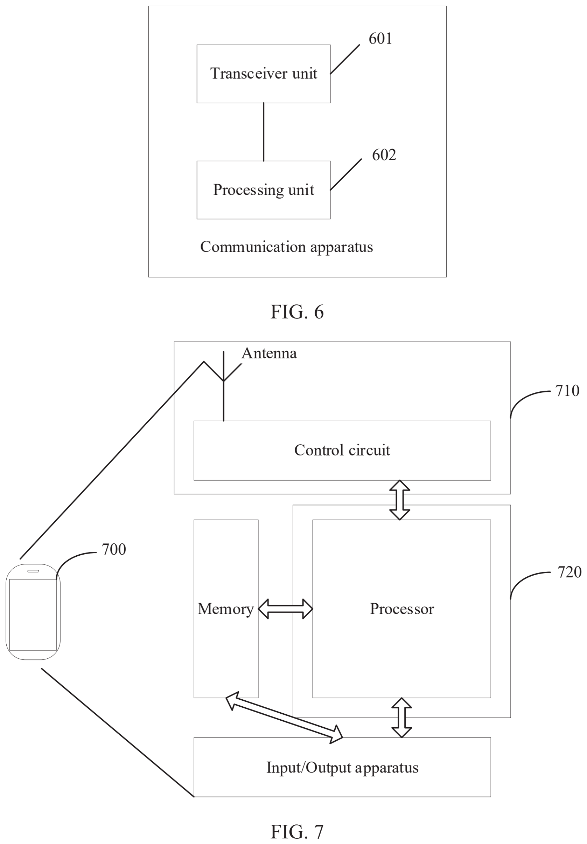

FIG. 6 is a diagram of a structure of another communication apparatus according to an embodiment of this application. The communication apparatus shown in FIG. 6 may be configured to perform some or all functions of the second device in the method embodiments described in FIG. 2 to FIG. 4. The apparatus may be the second device, an apparatus in the second device, or an apparatus that can be used with the second device. Alternatively, the communication apparatus may be a chip or a chip system. The communication apparatus shown in FIG. 6 may include a transceiver unit 601 and a processing unit 602.

In an implementation:

The processing unit 602 is configured to determine M reference signals in each of $N_T$ time units, where the M reference signals in each time unit are determined based on pilot signals corresponding to M antenna ports and phase shifts respectively corresponding to the M antenna ports, and $N_T$ and M are integers greater than 1; and

the transceiver unit 601 is configured to send the M reference signals to a first device on a time-frequency resource of each time unit.

In a possible implementation, the transceiver unit 601 is further configured to:

send first information to the first device, where the first information indicates a quantity $N_T$ of time units.

In a possible implementation, the transceiver unit 601 is further configured to:

send second information to the first device, where the second information indicates a Doppler basis corresponding to a channel of each of the M antenna ports.

In a possible implementation, the second information includes any one of the following information:

indication information of a sequence number of the Doppler basis corresponding to the channel of each of the M antenna ports; and

indication information of the phase shift corresponding to each of the M antenna ports.

In a possible implementation, the indication information of the phase shift corresponding to each of the M antenna ports includes any one of the following information:

indication information of a cyclic shift of each of the M antenna ports;

28

indication information of the quantity M of antenna ports; and

a phase shift of the pilot signal of each of the M antenna ports.

In a possible implementation, a reference signal of an antenna port m among the M antenna ports in a $t^{th}$ time unit among the $N_T$ time units includes $s_m e^{-(t-1)\theta mj}$, where the antenna port m is any one of the M antenna ports, $1 \le t \le N_T$, and t is an integer; and

$S_m$ is a pilot signal of the antenna port m, $e^{-(t-1)\theta mj}$ is a phase rotation factor corresponding to the antenna port m in the $t^{th}$ time unit, $\theta_m$ is a phase shift of the pilot signal corresponding to the antenna port m between adjacent time units among the $N_T$ time units, and j is an imaginary number.

In a possible implementation, $\theta_m$ is $\frac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T} 2\pi$, namely, $N_{MAX} = N_T$.

In a possible implementation, $\theta_m$ is $\frac{k_m}{N_{MAX}} 2\pi$ where $k_m$ represents a cyclic shift of the antenna port m, $0 \le k_m < N_{MAX}$ or $-N_{MAX} < k_m \le 0$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T} 2\pi$, namely, $N_{MAX} = N_T$.

In a possible implementation, the transceiver unit 601 is further configured to:

receive, from the first device, channel state information corresponding to each antenna port.

In another implementation:

The transceiver unit 601 is configured to send first information and one or more pieces of third information, where the first information indicates a quantity $N_T$ of time units, each piece of third information indicates a phase shift of a reference signal corresponding to each of M1 antenna ports included in one first device, a sum of quantities of antenna ports associated with all of the third information is equal to M, and $N_T$ and M are integers greater than 1;

the transceiver unit 601 is configured to receive M reference signals in each of the $N_T$ time units, where the M reference signals in each time unit are determined based on pilot signals corresponding to M antenna ports and phase shifts respectively corresponding to the M antenna ports, and the M reference signals in each time unit occupy a same time-frequency resource; and

the processing unit 602 is configured to determine, based on the M reference signals corresponding to each of the $N_T$ time units and the third information, channel state information corresponding to each of the M antenna ports.

In a possible implementation, the third information includes any one of the following information:

indication information of the quantity M1 of antenna ports;

indication information of a cyclic shift of each of the M1 antenna ports;

indication information of the phase shift of the reference signal corresponding to each of the M1 antenna ports; and

indication information of a sequence number of a Doppler domain basis corresponding to a channel of each of the M1 antenna ports.

In a possible implementation, a reference signal of an antenna port m among the M antenna ports in a $t^{th}$ time unit among the $N_T$ time units includes $s_m e^{-(t-1)\theta mj}$, where the antenna port m is any one of the M antenna ports, $1 \le t \le N_T$, and t is an integer; and

$s_m$ is a pilot signal of the antenna port m, $e^{-(t-1)\theta mj}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

In a possible implementation, $\theta_m$ is $\frac{k_m}{N_{MAX}} 2\pi$, where $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T} 2\pi$, namely, $N_{MAX} = N_T$,

In a possible implementation, $\theta_m$ is $\frac{k_m}{N_{MAX}}2\pi$ , where $k_m$ represents a cyclic shift of the antenna port m, $0 \le k_m < N_{MAX}$ or $-N_{MAX} < k_m \le 0$, $k_m$ is an integer, $N_{MAX}$ represents a maximum quantity of signals to be multiplexed, $0 < N_{MAX} \le N_T$, and $N_{MAX}$ is an integer. For example, $\theta_m$ is $\frac{k_m}{N_T}2\pi$ , namely, $N_{MAX} = N_T$.

For other possible implementations of the communication apparatus, refer to related descriptions of the functions of the second device in the method embodiments corresponding to FIG. 2 to FIG. 4. Details are not described herein again.

In a possible implementation, when the first device or the second device is a chip, the transceiver unit may be a communication interface, a pin, a circuit, or the like. The communication interface may be configured to input to-be-processed data to a processor, and may output a processing result of the processor. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing unit may be a processor. The processor may execute computer-executable instructions stored in a storage module, to enable the chip to perform the method in the embodiment of FIG. 4.

Further, the processor may include a controller, an arithmetic unit, and a register. For example, the controller mainly decodes instructions and sends a control signal for an operation corresponding to the instructions. The arithmetic unit mainly performs a fixed-point or floating-point arithmetic operation, a shift operation, a logic operation, and the like, and may also perform an address operation and address translation. The register mainly stores a register operand, an intermediate operation result, and the like that are temporarily stored during instruction execution. During specific implementation, a hardware architecture of the processor may be an ASIC architecture, a microprocessor without interlocked pipeline stages (microprocessor without interlocked pipeline stages, MIPS) architecture, an advanced reduced instruction set computing machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module outside the chip, for example, a ROM, another type of static storage device that can store static information and instructions, or a RAM.

It should be noted that functions respectively corresponding to the processor and the interface may be implemented by using a hardware design, or may be implemented by using a software design, or may be implemented by using a combination of software and hardware. This is not limited herein.

FIG. 7 is a diagram of a structure of another communication apparatus according to an embodiment of this application. As shown in FIG. 7, the communication apparatus may be the terminal device described in embodiments of this application, and is configured to implement the functions of the terminal device in FIG. 2 to FIG. 4. For example, the terminal device may be the first device or the second device in the foregoing embodiments of this application. For ease of description, FIG. 7 shows only main components of the terminal device 700. As shown in FIG. 7, the terminal device 700 includes a processor, a memory, a control circuit, an antenna, and an input/output apparatus. The processor is mainly configured to process a communication protocol and communication data, control the entire terminal device 700, execute a software program, and process data of the software program. The memory is mainly configured to store the software program and data. The control circuit is mainly configured to perform conversion between a baseband signal and a radio frequency signal, and process a radio frequency signal. The antenna is mainly configured to send and receive a radio frequency signal in a form of an electromagnetic wave. The input/output apparatus, for example, a touchscreen, a display, a microphone, or a keyboard, is mainly configured to receive data input by a user and output data to the user.

For example, the terminal device 700 is a mobile phone. After the terminal device 700 is powered on, the processor may read a software program in a storage unit, interpret and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in a form of an electromagnetic wave through the antenna. When data is sent to the terminal device 700, the control circuit receives a radio frequency signal through the antenna, converts the radio frequency signal into a baseband signal, and outputs the baseband signal to the processor. The processor converts the baseband signal into data, and processes the data.

A person skilled in the art can understand that, for ease of description, FIG. 7 shows only one memory and one processor. In some embodiments, the terminal device 700 may include a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device 700, execute the software program, and process the data of the software program. The processor in FIG. 7 integrates the functions of the baseband processor and the central processing unit. A person skilled in the art can understand that the baseband processor and the central processing unit may alternatively be processors independent of each other, and are interconnected by using a technology such as a bus. The terminal device 700 may include a plurality of baseband processors to adapt to different network standards. The terminal device 700 may include a plurality of central processing units to enhance a processing capability of the terminal device 700. Components of the terminal device 700 may be connected through various buses. The baseband processor may also be referred to as a baseband processing circuit or a baseband processing chip. The central processing unit may also be referred to as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 710 of the terminal device 700, and the processor that has a processing function may be considered as a processing unit 720 of the terminal device 700. As shown in FIG. 7, the terminal device 700 includes the transceiver unit 710 and the processing unit 720. The transceiver unit may also be referred to as a transceiver, a transceiver device, a transceiver apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. For example, the receiving unit may also be referred to as a receiver, a receiving device, or a receiving circuit; and the sending unit may be referred to as a transmitter, a transmitting device, or a transmitting circuit. The processing unit 720 may also be referred to as a processor, a processing board, a processing apparatus, or the like.

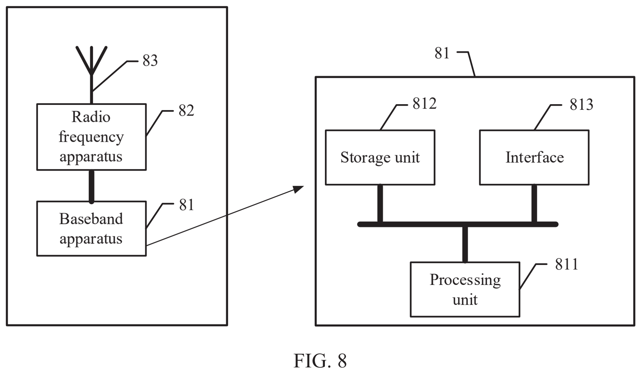

FIG. 8 is a diagram of a structure of another communication apparatus according to an embodiment of this application. As shown in FIG. 8, the communication apparatus may be the network device described in embodiments of this application, and is configured to implement the functions of the network device in FIG. 2 to FIG. 4. For example, the network device may be the first device or the second device in the foregoing embodiments of this application. The network device includes a baseband apparatus 81, a radio frequency apparatus 82, and an antenna 83. In an uplink direction, the radio frequency apparatus 82 receives, through the antenna 83, information sent by a terminal device; and sends, to the baseband apparatus 81 for processing, the information sent by the terminal device. In a downlink direction, the baseband apparatus 81 processes information for the terminal device, and sends processed information to the radio frequency apparatus 82; and the radio frequency apparatus 82 processes the information for the terminal device, and sends processed information to the terminal device through the antenna 83.

The baseband apparatus 81 includes one or more processing units 811, a storage unit 812, and an interface 813. The processing unit 811 is configured to support the network device in performing the functions of the network device in the foregoing method embodiments. The storage unit 812 is configured to store a software program and/or data. The interface 813 is configured to exchange information with the radio frequency apparatus 82. The interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 812 and the processing unit 811 may be located in one chip. In other words, the storage unit 812 is an on-chip storage element. Alternatively, the storage unit 812 and the processing unit 811 may be located in different chips. In other words, the storage unit 812 is an off-chip storage element. The storage unit 812 may be one memory, or may be a collective term for a plurality of memories or storage elements.

The network device may schedule a program through one or more processing units to implement some or all of the steps in the foregoing method embodiments, for example, implement corresponding functions of the network device in FIG. 2 to FIG. 4. The one or more processing units may support radio access technologies of a same standard, or may support radio access technologies of different standards.

An embodiment of this application further provides a computer-readable storage medium. The computer-readable storage medium stores instructions. When the instructions are run on a processor, the method processes in the foregoing method embodiments are implemented.

An embodiment of this application further provides a computer program product. When the computer program product is run on a processor, the method processes in the foregoing method embodiments are implemented.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division. The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods in embodiments of this application. The computer-readable storage medium may be any usable medium that can be accessed by a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive, another optical disk storage, a magnetic disk storage medium, another magnetic storage device, or any other medium that can carry or store expected program code in a form of an instruction or a data structure and that can be accessed by a computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A channel state information obtaining method, wherein the method is applied to a first device, and comprises:

   obtaining first information and second information, wherein the first information indicates a quantity $N_T$ of time units, and the second information indicates a Doppler basis corresponding to a channel of each of M antenna ports;
   receiving, in each of the $N_T$ time units, M reference signals from a second device, wherein the M reference signals occupy a same time-frequency resource, the M reference signals are determined based on a pilot signal and a phase shift of each of the M antenna ports, and $N_T$ and M are integers greater than 1; and
   determining, based on the M reference signals and the second information, channel state information corresponding to each of the M antenna ports.

2. The method according to claim 1, wherein the second information comprises any one of the following information:

   indication information of a sequence number of the Doppler basis corresponding to the channel of each of the M antenna ports; and
   indication information of the phase shift corresponding to each of the M antenna ports.

3. The method according to claim 2, wherein the indication information of the phase shift corresponding to each of the M antenna ports comprises any one of the following information:

   indication information of a cyclic shift of each of the M antenna ports;
   indication information of the quantity M of antenna ports; and
   a phase shift of the pilot signal of each of the M antenna ports.

4. The method according to any one of claims 1 to 3, wherein obtaining the first information comprises:
   receiving the first information from the second device.

5. The method according to any one of claims 1 to 4, wherein obtaining the second information comprises:
   receiving the second information from the second device.

6. The method according to any one of claims 1 to 5, wherein a reference signal of an antenna port m among the M antenna ports in a $t^{th}$ time unit among the $N_T$ time units comprises $s_m e^{-(t-1)\theta m j}$, wherein the antenna port m is any one of the M antenna ports, $1 \leq t \leq N_T$, and t is an integer; and
   $S_m$ is a pilot signal of the antenna port m, $e^{-(t-1)\theta m j}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

7. The method according to claim 6, wherein $\theta_m$ is $\dfrac{k_m}{N_{MAX}} 2\pi$, wherein $k_m$ represents a cyclic shift of the antenna port m,

   $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

8. The method according to any one of claims 1 to 7, wherein the method further comprises:
   sending, to the second device, the channel state information corresponding to each antenna port.

9. A channel state information obtaining method, wherein the method is applied to a second device, and comprises:

   determining M reference signals in each of $N_T$ time units, wherein the M reference signals in each time unit are determined based on pilot signals corresponding to M antenna ports and phase shifts respectively corresponding to the M antenna ports, and $N_T$ and M are integers greater than 1; and
   sending the M reference signals to a first device on a time-frequency resource of each time unit.

10. The method according to claim 9, wherein the method further comprises:
    sending first information to the first device, wherein the first information indicates a quantity $N_T$ of time units.

11. The method according to claim 9 or 10, wherein the method further comprises:
    sending second information to the first device, wherein the second information indicates a Doppler basis corresponding to a channel of each of the M antenna ports.

12. The method according to claim 11, wherein the second information comprises any one of the following information:

    indication information of a sequence number of the Doppler basis corresponding to the channel of each of the M antenna ports; and
    indication information of the phase shift corresponding to each of the M antenna ports.

13. The method according to claim 12, wherein the indication information of the phase shift corresponding to each of the M antenna ports comprises any one of the following information:

    indication information of a cyclic shift of each of the M antenna ports;
    indication information of the quantity M of antenna ports; and
    a phase shift of the pilot signal of each of the M antenna ports.

14. The method according to any one of claims 9 to 13, wherein a reference signal of an antenna port m among the M antenna ports in a $t^{th}$ time unit among the $N_T$ time units comprises $s_m e^{-(t-1)\theta m j}$, wherein the antenna port m is any one of the M antenna ports, $1 \leq t \leq N_T$, and t is an integer; and
    $s_m$ is a pilot signal of the antenna port m, $e^{-(t-1)\theta m j}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

15. The method according to claim 14, wherein $\theta_m$ is $\dfrac{k_m}{N_{MAX}} 2\pi$, wherein $k_m$ represents a cyclic shift of the antenna port m,

$0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

16. The method according to any one of claims 9 to 15, wherein the method further comprises:
    receiving, from the first device, channel state information corresponding to each antenna port.

17. A communication apparatus, comprising:

    a transceiver unit, configured to obtain first information and second information, wherein the first information indicates a quantity $N_T$ of time units, and the second information indicates a Doppler basis corresponding to a channel of each of M antenna ports, wherein
    the transceiver unit is configured to receive, in each of the $N_T$ time units, M reference signals from a second device, wherein the M reference signals occupy a same time-frequency resource, the M reference signals are determined based on a pilot signal and a phase shift of each of the M antenna ports, and $N_T$ and M are integers greater than 1; and
    a processing unit, configured to determine, based on the M reference signals and the second information, channel state information corresponding to each of the M antenna ports.

18. The apparatus according to claim 17, wherein the second information comprises any one of the following information:

    indication information of a sequence number of the Doppler basis corresponding to the channel of each of the M antenna ports; and
    indication information of the phase shift corresponding to each of the M antenna ports.

19. The apparatus according to claim 18, wherein the indication information of the phase shift corresponding to each of the M antenna ports comprises any one of the following information:

    indication information of a cyclic shift of each of the M antenna ports;
    indication information of the quantity M of antenna ports; and
    a phase shift of the pilot signal of each of the M antenna ports.

20. The apparatus according to any one of claims 17 to 19, wherein when obtaining the first information, the processing unit is configured to:
    receive the first information from the second device.

21. The apparatus according to any one of claims 17 to 20, wherein when obtaining the second information, the processing unit is configured to:
    receive the second information from the second device.

22. The apparatus according to any one of claims 17 to 21, wherein a reference signal of an antenna port m among the M antenna ports in a $t^{th}$ time unit among the $N_T$ time units comprises $s_m e^{-(t-1)\theta m j}$, wherein the antenna port m is any one of the M antenna ports, $1 \leq t \leq N_T$, and t is an integer; and
    $s_m$ is a pilot signal of the antenna port m, $e^{-(t-1)\theta m j}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

23. The apparatus according to claim 22, wherein $\theta_m$ is $\frac{k_m}{N_{MAX}} 2\pi$, wherein $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

24. The apparatus according to any one of claims 17 to 23, wherein the transceiver unit is further configured to:
    send, to the second device, the channel state information corresponding to each antenna port.

25. A communication apparatus, wherein the apparatus is used in a second device, and comprises:

    a processing unit, configured to determine M reference signals in each of $N_T$ time units, wherein the M reference signals in each time unit are determined based on pilot signals corresponding to M antenna ports and phase shifts respectively corresponding to the M antenna ports, and $N_T$ and M are integers greater than 1; and

a transceiver unit, configured to send the M reference signals to a first device on a time-frequency resource of each time unit.

26. The apparatus according to claim 25, wherein the transceiver unit is further configured to:
send first information to the first device, wherein the first information indicates a quantity $N_T$ of time units.

27. The apparatus according to claim 25 or 26, wherein the transceiver unit is further configured to:
send second information to the first device, wherein the second information indicates a Doppler basis corresponding to a channel of each of the M antenna ports.

28. The apparatus according to claim 27, wherein the second information comprises any one of the following information:

indication information of a sequence number of the Doppler basis corresponding to the channel of each of the M antenna ports; and
indication information of the phase shift corresponding to each of the M antenna ports.

29. The apparatus according to claim 28, wherein the indication information of the phase shift corresponding to each of the M antenna ports comprises any one of the following information:

indication information of a cyclic shift of each of the M antenna ports;
indication information of the quantity M of antenna ports; and
a phase shift of the pilot signal of each of the M antenna ports.

30. The apparatus according to any one of claims 25 to 29, wherein a reference signal of an antenna port m among the M antenna ports in a $t^{th}$ time unit among the $N_T$ time units comprises $s_m e^{-(t-1)\theta mj}$, wherein the antenna port m is any one of the M antenna ports, $1 \leq t \leq N_T$, and t is an integer; and

$s_m$ is a pilot signal of the antenna port m, $e^{-(t-1)\theta mj}$ is a phase rotation factor corresponding to the antenna port m in the $t^{th}$ time unit, $\theta_m$ is a phase shift of the pilot signal of the antenna port m between adjacent time units among the $N_T$ time units, and j is an imaginary number.

31. The apparatus according to claim 30, wherein $\theta_m$ is $\frac{k_m}{N_{MAX}} 2\pi$, wherein $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

32. The apparatus according to any one of claims 24 to 31, wherein the transceiver unit is further configured to:
receive, from the first device, channel state information corresponding to each antenna port.

33. A channel state information obtaining method, wherein the method is applied to a first device, the first device comprises M1 antenna ports, and the method comprises:

obtaining first information and third information, wherein the first information indicates a quantity $N_T$ of time units, the third information indicates a phase shift of a reference signal corresponding to each of the M1 antenna ports, and $N_T$ is an integer greater than 1; and
sending the one or more reference signals to a second device on a time-frequency resource of each of the $N_T$ time units, wherein the one or more reference signals in each time unit is/are determined based on pilot signals corresponding to the M1 antenna ports and phase shifts respectively corresponding to the M1 antenna ports.

34. The method according to claim 33, wherein the third information comprises any one of the following information:

indication information of the quantity M1 of antenna ports;
indication information of a cyclic shift of each of the M1 antenna ports;
indication information of the phase shift of the reference signal corresponding to each of the M1 antenna ports; and
indication information of a sequence number of a Doppler domain basis corresponding to a channel of each of the M1 antenna ports.

35. The method according to claim 33 or 34, wherein obtaining the first information comprises:
receiving the first information from the second device.

36. The method according to any one of claims 33 to 35, wherein obtaining the third information comprises:
receiving the third information from the second device.

37. The method according to any one of claims 33 to 36, wherein a reference signal corresponding to an antenna port m among the M1 antenna ports in a $t^{th}$ time unit among the $N_T$ time units is $s_m e^{-(t-1)\theta mj}$, wherein the antenna port m is any one of the M1 antenna ports, $1 \leq t \leq N_T$, and t is an integer; and
$S_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

38. The method according to claim 37, wherein $\theta_m$ is $\dfrac{k_m}{N_{MAX}} 2\pi$, wherein $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer.

39. The method according to claim 37, wherein $\theta_m$ is $\dfrac{k_m}{N_{MAX}} 2\pi$, wherein $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

40. A channel state information obtaining method, wherein the method is applied to a second device, and the method comprises:

sending first information and one or more pieces of third information, wherein the first information indicates a quantity $N_T$ of time units, each piece of third information indicates a phase shift of a reference signal corresponding to each of M1 antenna ports comprised in one first device, a sum of quantities of antenna ports associated with all of the third information is equal to M, and $N_T$ and M are integers greater than 1;
receiving M reference signals in each of the $N_T$ time units, wherein the M reference signals in each time unit are determined based on pilot signals corresponding to M antenna ports and phase shifts respectively corresponding to the M antenna ports, and the M reference signals in each time unit occupy a same time-frequency resource; and
determining, based on the M reference signals corresponding to each of the $N_T$ time units and the third information, channel state information corresponding to each of the M antenna ports.

41. The method according to claim 40, wherein the third information comprises any one of the following information:

indication information of the quantity M1 of antenna ports;
indication information of a cyclic shift of each of the M1 antenna ports;
indication information of the phase shift of the reference signal corresponding to each of the M1 antenna ports; and
indication information of a sequence number of a Doppler domain basis corresponding to a channel of each of the M1 antenna ports.

42. The method according to claim 40 or 41, wherein a reference signal corresponding to an antenna port m among the M antenna ports in a $t^{th}$ time unit among the $N_T$ time units is $s_m e^{-(t-1)\theta mj}$, wherein the antenna port m is any one of the M antenna ports, $1 \leq t \leq N_T$, and t is an integer; and
$S_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

43. The method according to claim 42, wherein $\theta_m$ is $\dfrac{k_m}{N_{MAX}} 2\pi$, wherein $k_m$ represents a cyclic shift of the antenna port

m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer.

44. The method according to claim 42, wherein $\theta_m$ is $\dfrac{k_m}{N_{MAX}} 2\pi$, wherein $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

45. A channel state information obtaining apparatus, wherein the apparatus comprises M1 antenna ports, and the apparatus comprises:

a transceiver unit, configured to obtain first information and third information, wherein the first information indicates a quantity $N_T$ of time units, the third information indicates a phase shift of a reference signal corresponding to each of the M1 antenna ports, and $N_T$ is an integer greater than 1, wherein the transceiver unit is configured to send the one or more reference signals to a second device on a time-frequency resource of each of the $N_T$ time units, wherein the one or more reference signals in each time unit is/are determined based on pilot signals corresponding to the M1 antenna ports and phase shifts respectively corresponding to the M1 antenna ports.

46. The apparatus according to claim 45, wherein the third information comprises any one of the following information:

indication information of the quantity M1 of antenna ports;
indication information of a cyclic shift of each of the M1 antenna ports;
indication information of the phase shift of the reference signal corresponding to each of the M1 antenna ports; and
indication information of a sequence number of a Doppler domain basis corresponding to a channel of each of the M1 antenna ports.

47. The apparatus according to claim 45 or 46, wherein when obtaining the first information, the transceiver unit is specifically configured to:
receive the first information from the second device.

48. The apparatus according to any one of claims 45 to 47, wherein when obtaining the third information, the transceiver unit is specifically configured to:
receive the third information from the second device.

49. The apparatus according to any one of claims 45 to 48, wherein a reference signal corresponding to an antenna port m among the M1 antenna ports in a $t^{th}$ time unit among the $N_T$ time units is $s_m e^{-(t-1)\theta m j}$, wherein the antenna port m is any one of the M1 antenna ports, $1 \leq t \leq N_T$, and t is an integer; and
$s_m$ is a pilot signal corresponding to the antenna port m, $e^{-(t-1)\theta m j}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

50. The apparatus according to claim 49, wherein $\theta_m$ is $\dfrac{k_m}{N_{MAX}} 2\pi$, wherein $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer.

51. The apparatus according to claim 49, wherein $\theta_m$ is $\dfrac{k_m}{N_{MAX}} 2\pi$, wherein $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

52. A channel state information obtaining apparatus, wherein the apparatus comprises:

a transceiver unit, configured to send first information and one or more pieces of third information, wherein the first information indicates a quantity $N_T$ of time units, each piece of third information indicates a phase shift of a reference signal corresponding to each of M1 antenna ports comprised in one first device, a sum of quantities of antenna ports associated with all of the third information is equal to M, and $N_T$ and M are integers greater than 1, wherein

the transceiver unit is configured to receive M reference signals in each of the $N_T$ time units, wherein the M reference signals in each time unit are determined based on pilot signals corresponding to M antenna ports and phase shifts respectively corresponding to the M antenna ports, and the M reference signals in each time unit occupy a same time-frequency resource; and

a processing unit, configured to determine, based on the M reference signals corresponding to each of the $N_T$ time units and the third information, channel state information corresponding to each of the M antenna ports.

53. The apparatus according to claim 52, wherein the third information comprises any one of the following information:

indication information of the quantity M1 of antenna ports;
indication information of a cyclic shift of each of the M1 antenna ports;
indication information of the phase shift of the reference signal corresponding to each of the M1 antenna ports; and
indication information of a sequence number of a Doppler domain basis corresponding to a channel of each of the M1 antenna ports.

54. The apparatus according to claim 52 or 53, wherein a reference signal corresponding to an antenna port m among the M antenna ports in a $t^{th}$ time unit among the $N_T$ time units is $s_m e^{-(t-1)\theta mj}$, wherein the antenna port m is any one of the M antenna ports, $1 \leq t \leq N_T$, and t is an integer; and

$s_m$ is a pilot signal corresponding to the antenna port m, $e^{-(t-1)\theta mj}$ is a phase rotation factor corresponding to the antenna port m in the $t^{th}$ time unit among the $N_T$ time units, $\theta_m$ is a phase shift of a reference signal of the antenna port m between adjacent time units among the $N_T$ time units, and j is an imaginary number.

55. The apparatus according to claim 54, wherein $\theta_m$ is $\dfrac{k_m}{N_{MAX}} 2\pi$, wherein $k_m$ represents a cyclic shift of the antenna port m, $-N_{MAX} < k_m < N_{MAX}$, $k_m$ is an integer, $N_{MAX}$ represents a maximum quantity of signals to be multiplexed, $0 < N_{MAX} \leq N_T$, and $N_{MAX}$ is an integer.

56. The apparatus according to claim 54, wherein $\theta_m$ is $\dfrac{k_m}{N_{MAX}} 2\pi$, wherein $k_m$ represents a cyclic shift of the antenna port m, $0 \leq k_m < N_{MAX}$ or $-N_{MAX} < k_m \leq 0$, $k_m$ is an integer, $N_{MAX}$ represents a maximum quantity of signals to be multiplexed, $0 < N_{MAX} \leq N_T$, and $N_{MAX}$ is an integer.

57. A communication apparatus, comprising:

one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 8, or perform the method according to any one of claims 9 to 16, or perform the method according to any one of claims 33 to 39, or perform the method according to any one of claims 40 to 44.

58. A computer-readable storage medium, wherein the storage medium stores a computer program or computer instructions, and when the computer program or the computer instructions is/are executed by a computer, the method according to any one of claims 1 to 8 is implemented, or the method according to any one of claims 9 to 16 is implemented, or the method according to any one of claims 33 to 39 is implemented, or the method according to any one of claims 40 to 44 is implemented.

59. A computer program product, comprising computer program code, wherein when the computer program code is run on a computer, the method according to any one of claims 1 to 8 is implemented, or the method according to any one of claims 9 to 16 is implemented, or the method according to any one of claims 33 to 39 is implemented, or the method according to any one of claims 40 to 44 is implemented.

**60.** A chip or a chip system, comprising an input/output interface and a processing circuit, wherein the input/output interface is configured to exchange information or data, and the processing circuit is configured to run instructions, to enable an apparatus on which the chip or the chip system is installed to perform the method according to any one of claims 1 to 8, or perform the method according to any one of claims 9 to 16, or perform the method according to any one of claims 33 to 39, or perform the method according to any one of claims 40 to 44.

FIG. 1

First device

Second device

S201: Obtain first information and second information

S202: Send M reference signals on a time-frequency resource of each of $N_T$ time units

S203: Determine, based on the M reference signals corresponding to each of the $N_T$ time units and the second information, channel state information corresponding to each of M antenna ports

FIG. 2

FIG. 3

| First device | | Second device |
|---|---|---|
| S401: Obtain first information and third information | | |

S402: Send M1 reference signals on a time-frequency resource of each of $N_T$ time units

S403: Determine, based on M reference signals corresponding to each of the $N_T$ time units and the third information, channel state information corresponding to each of M antenna ports

FIG. 4

Transceiver unit — 501

Processing unit — 502

Communication apparatus

FIG. 5

FIG. 6

FIG. 7

FIG. 8

## INTERNATIONAL SEARCH REPORT

| International application No. |
| --- |
| **PCT/CN2024/072468** |

| A. | CLASSIFICATION OF SUBJECT MATTER |
| --- | --- |
| | H04L 5/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L, H04W, G06F

Documentation searched other than minimum documentation to the extent that such documents are included in the fields searched

Electronic data base consulted during the international search (name of data base and, where practicable, search terms used)

3GPP, IEEE, CNTXT, ENTXTC, ENTXT, VEN, CNKI: 参考信号, 导频, 端口, 复用, 时间单元, 时隙, 天线, 相位, 位移, 偏移, 旋转, 信道估计, 信道状态信息, CSI报告, 多普勒, reference signal, DMRS, SRS, pilot, port, multiplex+, slot, time unit, bias, excursion, offset, rotation, shift, channel estimat+, CSI, channel state information, channel state indication, CSI report, doppler

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 109150428 A (CHINA ACADEMY OF TELECOMMUNICATIONS TECHNOLOGY) 04 January 2019 (2019-01-04) description, paragraphs 2-3 and 60-110 | 9, 16, 25, 32, 57-60 |
| Y | WO 2015078016 A1 (HUAWEI TECHNOLOGIES CO., LTD.) 04 June 2015 (2015-06-04) description, page 6, line 15 to page 8, line 7 | 9, 16, 25, 32, 57-60 |
| A | CN 105284087 A (HUAWEI TECHNOLOGIES CO., LTD.) 27 January 2016 (2016-01-27) entire document | 1-60 |
| A | CN 115004828 A (HUAWEI TECHNOLOGIES CO., LTD.) 02 September 2022 (2022-09-02) entire document | 1-60 |
| A | US 2014198763 A1 (TELEFONAKTIEBOLAGET LM ERICSSON (PUBL)) 17 July 2014 (2014-07-17) entire document | 1-60 |
| A | US 2022045821 A1 (HUAWEI TECHNOLOGIES CO., LTD.) 10 February 2022 (2022-02-10) entire document | 1-60 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 April 2024** | **17 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/072468**

| Patent document cited in search report | | | Publication date (day/month/year) | Patent family member(s) | | | Publication date (day/month/year) |
|---|---|---|---|---|---|---|---|
| CN | 109150428 | A | 04 January 2019 | None | | | |
| WO | 2015078016 | A1 | 04 June 2015 | None | | | |
| CN | 105284087 | A | 27 January 2016 | WO | 2015078016 | A1 | 04 June 2015 |
| CN | 115004828 | A | 02 September 2022 | WO | 2021147112 | A1 | 29 July 2021 |
| | | | | WO | 2021147214 | A1 | 29 July 2021 |
| | | | | EP | 4096333 | A1 | 30 November 2022 |
| | | | | EP | 4096333 | A4 | 28 June 2023 |
| | | | | US | 2022377707 | A1 | 24 November 2022 |
| US | 2014198763 | A1 | 17 July 2014 | WO | 2014027948 | A1 | 20 February 2014 |
| | | | | US | 9106276 | B2 | 11 August 2015 |
| | | | | EP | 2883324 | A1 | 17 June 2015 |
| | | | | EP | 2883324 | B1 | 05 October 2016 |
| US | 2022045821 | A1 | 10 February 2022 | EP | 3952176 | A1 | 09 February 2022 |
| | | | | EP | 3952176 | A4 | 04 May 2022 |
| | | | | WO | 2020215287 | A1 | 29 October 2020 |

Form PCT/ISA/210 (patent family annex) (July 2022)

**REFERENCES CITED IN THE DESCRIPTION**

**Patent documents cited in the description**

- CN 202310108596